(19) Europäisches Patentamt
European Patent Office
Office européen des brevets

(11) **EP 4 572 243 A1**

(12) **EUROPEAN PATENT APPLICATION**
published in accordance with Art. 153(4) EPC

(43) Date of publication:
**18.06.2025 Bulletin 2025/25**

(21) Application number: **22954653.6**

(22) Date of filing: **12.08.2022**

(51) International Patent Classification (IPC):
***H04L 25/02*** *(2006.01)*

(52) Cooperative Patent Classification (CPC):
**H04L 25/02**

(86) International application number:
**PCT/CN2022/112299**

(87) International publication number:
**WO 2024/031701 (15.02.2024 Gazette 2024/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• WANG, Xin
  Beijing 100022 (CN)
• ZHANG, Qun
  Beijing 100022 (CN)
• SUN, Gang
  Beijing 100022 (CN)
• ZHANG, Jian
  Beijing 100022 (CN)

(74) Representative: **Haseltine Lake Kempner LLP**
**Cheapside House**
**138 Cheapside**
**London EC2V 6BJ (GB)**

(54) **DATA ACQUISITION METHOD AND APPARATUS**

(57)    Embodiments of the present disclosure provide a method and an apparatus for acquiring data. An AI/ML model includes an information generation portion located in a first device and an information reconstruction portion located in the second device, and the method includes: the second device acquires first data X that are inputted to the information generation portion; and acquires second data Y corresponding to the first data X and outputted from the information generation portion.

601

the second device acquires first data X inputted into the information generation portion

602

the second device acquires second data Y corresponding to the first data X and outputted from the information generation portion

**FIG. 6**

EP 4 572 243 A1

**Description**

TECHNICAL FIELD

Embodiments of the present disclosure relate to the technical field of communication.

BACKGROUND

Multi-antenna technology has been widely applied in LTE, LTE-A and 5G NR systems. In particular, a massive antenna technology (massive MIMO) is supported very well in the 5G Standard. It may be predicted that in 5G-Advanced stage and 6G stage, the massive MIMO technology will be used more widely, massive and ultra-massive antenna technologies with enhanced performance are also research focuses of a next generation mobile communication system.

With development of artificial intelligence (AI) and machine learning (ML) technologies, applying AI/ML technologies to radio communication becomes a current technical direction, so as to solve difficulties of traditional methods. Applying an AI/ML model to a radio communication system, particularly to transmission of an air interface, is a new technology in 5G-Advanced and 6G stages.

For example, for measurement and feedback of channel state information (CSI), CSI is measured at a terminal equipment side, an AI/ML model is used to generate CSI feedback information, and after transmitting the same to a network side via an air interface, the network side receives the CSI feedback information, and restores original CSI via a corresponding AI/ML model. In such example, by using the AI/ML model, CSI feedback overhead may be reduced, or quality of feedbacks may be improved, thereby improving the communication quality.

Similarly, after information of a transmitting side (a network device or a terminal equipment) is processed by a AI/ML model, the information is transmitted to a receiving side (a terminal equipment or a network device) via an air interface, and the receiving side uses a model corresponding to the AI/ML model of the transmitting side to recover information of the AI/ML model inputted by the transmitting side. Generally, this type of AI/ML model may be called a two-sided model.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

SUMMARY

However, the inventor finds that a paired property of the two-sided model makes its training process require collaboration of a network device and a terminal equipment at both sides of an air interface, performing network model training via the air interface will cause huge air interface overhead.

For at least one of the above problems, embodiments of the present disclosure provide a method for acquiring data, wherein an AI/ML model includes an information generation portion located in a first device and an information reconstruction portion located in a second device, and the method includes:

> the second device acquires first data X inputted into the information generation portion; and
> the second device acquires second data Y corresponding to the first data X and outputted from the information generation portion.

According to one aspect of the embodiments of the present disclosure, an apparatus for acquiring data is provided, configured in a second device, wherein an AI/ML model includes an information generation portion located in a first device and an information reconstruction portion located in the second device, and the apparatus for acquiring data includes:

> a first acquiring unit configured to acquire first data X inputted into the information generation portion; and
> a second acquiring unit configured to acquire second data Y corresponding to the first data X and outputted from the information generation portion.

According to another aspect of the embodiments of the present disclosure, a method for acquiring data is provided, wherein an AI/ML model includes an information generation portion located in a first device and an information reconstruction portion located in a second device, and the method includes:

> the first device acquires first data X outputted by the information reconstruction portion; and

the first device acquires second data Y inputted into the information reconstruction portion and corresponding to the first data X.

According to a further aspect of the embodiments of the present disclosure, an apparatus for acquiring data is provided, configured in a first device, wherein an AI/ML model includes an information generation portion located in the first device and an information reconstruction portion located in a second device, and the apparatus includes:

a third acquiring unit configured to acquire first data X outputted by the information reconstruction portion; and
a fourth acquiring unit configured to acquire second data Y inputted into the information reconstruction portion and corresponding to the first data X.

According to another aspect of the embodiments of the present disclosure, a communication system is provided, wherein an AI/ML model includes a CSI generation portion located in a terminal equipment and a CSI reconstruction portion located in a network device, and the system includes:

the network device configured to acquire a specific codebook vector inputted into the CSI generation portion, and acquire CSI bit information outputted from the CSI generation portion and corresponding to the codebook vector; and
the terminal equipment configured to acquire a codebook vector outputted by the CSI reconstruction portion, and acquire CSI bit information inputted into the CSI reconstruction portion and corresponding to the codebook vector.

One of advantageous effects of the embodiments of the present disclosure lies in: the second device acquires first data X that are inputted to the information generation portion; and the second device acquires second data Y corresponding to the first data X and outputted from the information generation portion. Thereby, suitable data may be obtained at a smaller cost to support a two-sided network model architecture.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

FIG. 1 is a schematic diagram of a communication system in the embodiments of the present disclosure;
FIG. 2 is an example diagram of a two-sided model in the embodiments of the present disclosure;
FIG. 3 is another example diagram of a two-sided model in the embodiments of the present disclosure;
FIG. 4 is another example diagram of a two-sided model in the embodiments of the present disclosure;
FIG. 5 is another example diagram of a two-sided model in the embodiments of the present disclosure;
FIG. 6 is a schematic diagram of a method for acquiring data in the embodiments of the present disclosure;
FIG. 7 is a schematic diagram of data in the embodiments of the present disclosure;
FIG. 8 is a schematic diagram of joint training in the embodiments of the present disclosure;
FIG. 9 is a schematic diagram of separate training in the embodiments of the present disclosure;
FIG. 10 is a schematic diagram after separate training in the embodiments of the present disclosure;
FIG. 11 is a schematic diagram of application of a two-sided model in a gNB and a UE in the embodiments of the present disclosure;
FIG. 12 is a schematic diagram of a method for acquiring data in the embodiments of the present disclosure;
FIG. 13 is an example diagram of building a dataset in the embodiments of the present disclosure;
FIG. 14 is a schematic diagram of a method for acquiring data in the embodiments of the present disclosure;
FIG. 15 is an example diagram of acquiring data by a CSI reconstruction portion in the embodiments of the present disclosure;

FIG. 16 is an example diagram of training by a CSI reconstruction portion in the embodiments of the present disclosure;

FIG. 17 is another example diagram of acquiring data by a CSI reconstruction portion in the embodiments of the present disclosure;

FIG. 18 is another example diagram of training by a CSI reconstruction portion in the embodiments of the present disclosure;

FIG. 19 is a further example diagram of training by a CSI reconstruction portion in the embodiments of the present disclosure;

FIG. 20 is a signaling schematic diagram of training by a CSI reconstruction portion in the embodiments of the present disclosure;

FIG. 21 is a schematic diagram of a method for acquiring data in the embodiments of the present disclosure;

FIG. 22 is an example diagram of acquiring data by a CSI generation portion in the embodiments of the present disclosure;

FIG. 23 is a further example diagram of training by a CSI generation portion in the embodiments of the present disclosure;

FIG. 24 is a signaling schematic diagram of training by a CSI generation portion in the embodiments of the present disclosure;

FIG. 25 is a schematic diagram of an apparatus for acquiring data in the embodiments of the present disclosure;

FIG. 26 is another schematic diagram of an apparatus for acquiring data in the embodiments of the present disclosure;

FIG. 27 is a schematic diagram of a network device in the embodiments of the present disclosure;

FIG. 28 is a schematic diagram of a terminal equipment in the embodiments of the present disclosure.

## DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and 5G, New Radio (NR), future 6G and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB), a 5G base station (gNB) and an IAB donor, etc., and may further includes a Remote Radio Head (RRH), a Remote Radio Unit (RRU), a relay or a low power node (such as femeto, pico, etc.). And the term "base station" may include their some or all functions, each base station may provide communication coverage to a specific geographic region. The term "cell" may refer to a BS and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehiclemounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

Scenarios of the embodiments of the present disclosure are described by using the following examples, however the present disclosure is not limited to these.

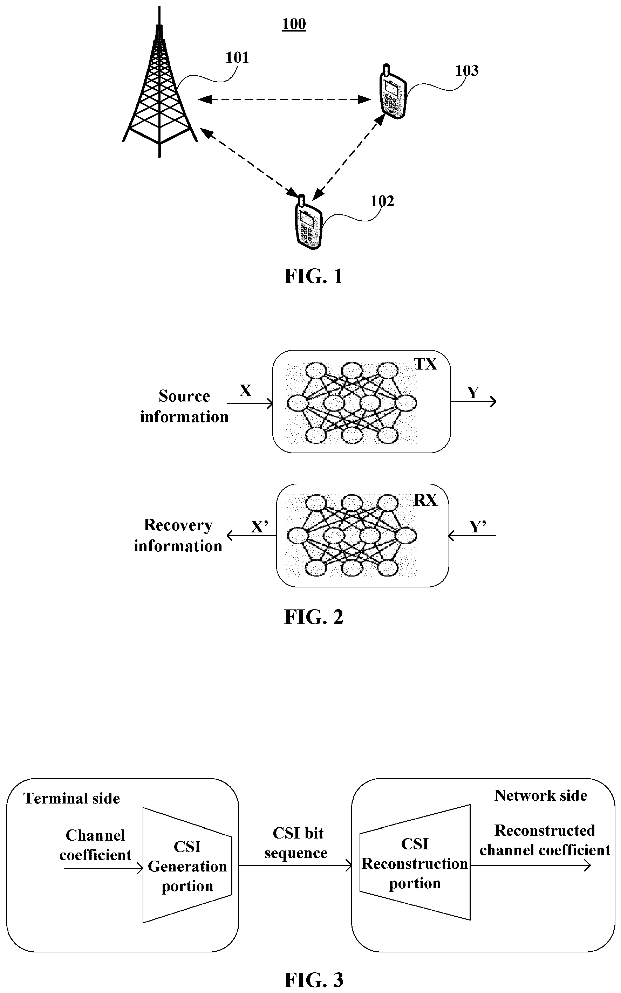

FIG. 1 is a schematic diagram of a communication system in the embodiments of the present disclosure, schematically describes situations by taking a terminal equipment and a network device as examples, as shown in FIG. 1, a communication system 100 may include a network device 101 and terminal equipments 102, 103. For simplicity, FIG. 1 only takes two terminal equipments and one network device as examples for description, however the embodiments of the present disclosure are not limited to this.

In the embodiments of the present disclosure, transmission of existing or further implementable services may be carried out between the network device 101 and the terminal equipments 102, 103. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 1 shows that two terminal equipments 102 and 103 are within the coverage of network device 101, but the present disclosure is not limited to this. The two terminal equipments 102 and 103 may be outside the coverage of the network device 101, or one terminal equipment 102 may be within the coverage of the network device 101 and the other terminal equipment 103 may be outside the coverage of the network device 101.

In the embodiments of the present disclosure, high layer signaling may be e.g. radio resource control (RRC) signaling; for example, is called an RRC message, for example includes an MIB, system information, or a dedicated RRC message; or is called an RRC information element (RRC IE). The high layer signaling, for example, may further be Medium Access Control (MAC) signaling; or called a MAC control element (MAC CE). However, the present disclosure is not limited to this.

In the embodiments of the present disclosure, one or more AI/ML models may be configured and run in a network device and/or a terminal equipment. The AI/ML model may be used for various signal processing functions of wireless communication, such as CSI estimation and reporting, beam management and beam prediction, etc.; the present disclosure is not limited to this.

FIG. 2 is an example diagram of a two-sided model in the embodiments of the present disclosure. As shown in FIG. 2, a part of the AI/ML model is at the transmitting side TX, and the other part thereof is at the receiving side RX. At the transmitting side, information Y is generated after source information X is inputted into the model, and the information Y is transmitted to the receiving side. At the receiving side, information Y' transmitted via a channel is inputted into the model, and then generates recovery information X'. The above information satisfies the following Formula 1:

$$Y = f(X)$$
$$Y' = h(Y) + n \qquad \text{(Formula 1)}$$
$$X' = g(Y')$$
$$\|X - X'\| \to 0$$

where, $f(\cdot)$ is a transfer function of a neural network at the TX side, X is source information of the neural network at TX, Y is its output signal, $h(\cdot)$ is a channel response coefficient between TX and RX, n is Gaussian noise, $g(\cdot)$ is a transfer function of the neural network at RX side, Y' is an input signal of the neural network at RX, and X' is its output signal.

During iterative training, a loss function makes X' as close as possible to X, i.e. $\|X-X'\| \to 0$. The loss function may use cosine similarity, NMSE, or MSE as a metric. After the training is completed, the TX neural network and the RX neural network are deployed at the TX side (such as a UE side) and the RX side (such as a gNB side) respectively, and communicate with each other via an air interface.

For example, a two-sided model may be applied to CSI generation and reporting.

FIG. 3 is another example diagram of a two-sided model in the embodiments of the present disclosure. As shown in FIG. 3, the two-sided model includes a CSI generation portion (which may also called a CSI encoder) at a terminal equipment side and a CSI reconstruction portion (which may also called a CSI decoder) at a network device side.

As shown in FIG. 3, input of the CSI generation portion is channel coefficient information, may be a channel coefficient vector or matrix generated by channel estimation, or a channel feature vector or singular vector generated by matrix decomposition of the channel coefficient matrix. Output of the CSI generation portion is a CSI bit sequence formed upon feature extraction, information compression and quantization. This bit sequence as a part of uplink control information (UCI) is carried on an uplink control channel or an uplink data channel, and is transmitted to the network side.

As shown in FIG. 3, the network device extracts a corresponding CSI bit sequence from received UCI and inputs it to the CSI reconstruction portion. Output of the CSI reconstruction portion is a reconstructed channel coefficient vector or matrix, or a channel feature vector or singular vector, which specifically is corresponding to the input of the CSI generation portion.

In addition to the above CSI examples, the two-sided model may further replace traditional signal processing methods, and is used in modules processed in pairs in a communication system.

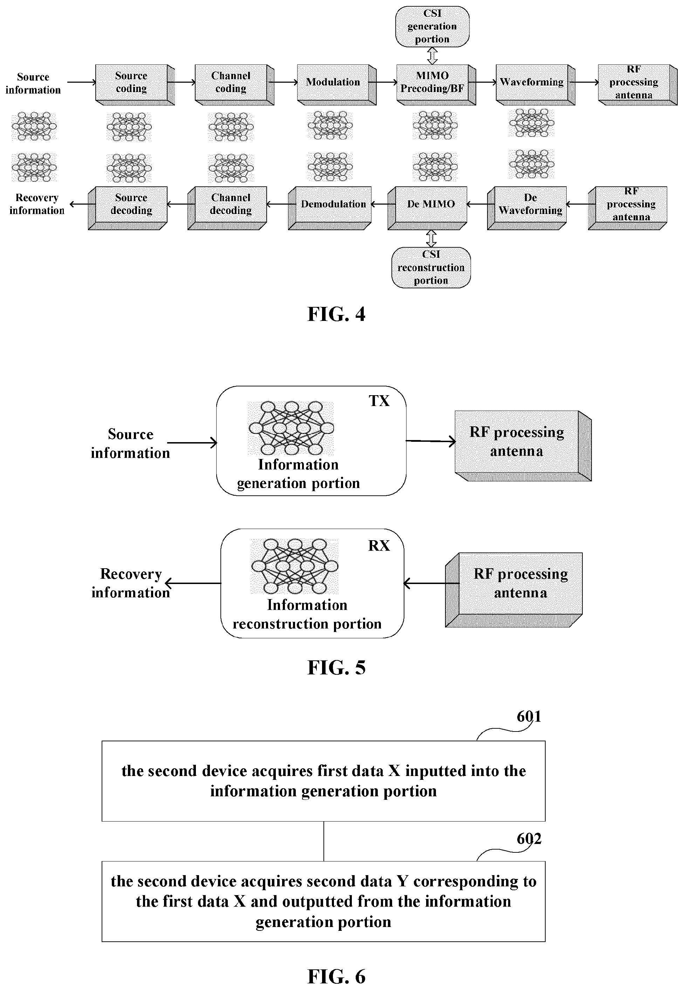

FIG. 4 is another example diagram of a two-sided model in the embodiments of the present disclosure. As shown in FIG. 4, for example, source coding/decoding of a source signal, channel coding/decoding, channel modulation/demodulation, multi-antenna module mimo/de-mimo (specifically, it may include corresponding paired signal processing at both transmitting side and receiving side for mimo multi-data stream multiplexing, mimo space-time coding, mimo precoding/ beamforming, etc., a transmitting network portion of other transmitting side from multiple data streams to multiple antenna ports, a receiving network portion corresponding to a receiving side), waveforming/de-waveforming of a transmitting waveform, etc.

Therefore, signal processing flows or functions of both a transmitting side and a receiving side of communication may be combined, and a neural network model may be introduced to implement original signal processing.

FIG. 5 is another example diagram of a two-sided model in the embodiments of the present disclosure. Both the transmitting side and the receiving side may be shown in FIG. 5, the transmitting side is provided with an information generation portion, and the receiving side is provided with an information reconstruction portion, thereby a two-sided model may be used for paired signal processing.

Ideally, construction and upgrading of this two-sided model need to be completed by joint training, that is, the information generation portion and the information reconstruction portion need to complete joint initial training, joint fine tuning, joint retraining and joint model upgrading. All the joint training related processes of said two-sided model include offline operations or online operations.

In practice, both offline joint training and online joint training face great challenges. The reason is that the information generation portion and the information reconstruction portion of the two-sided model are generally developed by different manufacturers, and are deployed at both sides of an air interface. Offline training faces a problem of collaboration between manufacturers, online training faces a problem of air interface overhead, in addition, they also involve problems of hardware support, intellectual property rights of a model and so on.

In a two-sided model building phase, it is difficult for a network manufacturer's equipment to work with a terminal manufacturer's equipment to complete training, verification and testing processes of a two-sided model. If the two perform model development respectively, how to achieve a collaborative work by models that are developed respectively is a difficult problem.

In addition, the inventor finds that for the two-sided model, if a model at the network side and a model at the terminal side do not match, two sides of the communication cannot work together. In one scheme, one side may transmit its matched model to the other side. For example, the network side transmits a CSI generation portion that matches a CSI reconstruction portion to the terminal side via an air interface, and the terminal side uses the CSI generation portion to work after reception. However, this requires the terminal side to have AI/ML receiving and upgrading capabilities, and requirements on its hardware and software are very high. On the other hand, considering the ownership problem of intellectual property rights of an AI/ML model, a scheme of transmitting and using the AI/ML model between a network device and a terminal equipment has intellectual property issues in addition to device capabilities, and collaboration issues between other manufactures. Therefore, a scheme of reaching two-sided model pairing via model transmission will face a lot of problems.

In another scheme, an AI/ML model at the terminal side or the network side may be updated, so that models at both sides may be paired and work jointly. To achieve this process, joint training needs to be performed on AI/ML model(s) at one side or both sides. A data set is required for model training, and a label data set is further required for supervised learning. For AI/ML models deployed at the network side and the terminal side, joint training brings very large air interface overhead, including overhead for outputting a relevant data set, and overhead of inputs and outputs corresponding to a back-and-forth iterative process, it is difficult to support such process in an air interface of mobile communication.

Therefore, in order to support a two-sided network model architecture, a mechanism is needed to decouple joint training, each side of the two-sided model may be trained independently. To this end, embodiments of the present disclosure proposes a scheme of using shared paired data sets to achieve independent training, and provides a method and an apparatus for reducing a dimension of a shared data set and reducing overhead of an air interface for acquiring data.

Terms involved in the embodiments of the present disclosure are described as follows:

Joint training, or called joint learning, includes a process in which model portions at two sides of a two-sided model need to jointly perform training (including initial training, retraining, online training, offline training, fine tuning, etc., also including necessary sub-processes of model verification and model testing in a training model).

Separate training, or called respective training or called independent training, includes a process in which model portions at two sides of a two-sided model may separately perform training (including initial training, retraining, online training, offline training, fine tuning, etc., also including necessary sub-processes of model verification and model testing in a training model).

The above text schematically describes relevant concepts and terms, but the present disclosure is not limited to this, they may be replaced with other concepts and terms. For specific contents involved, relevant technologies may further be referred to.

Embodiments of a first aspect

Embodiments of the present disclosure provide a method for acquiring data, which is described from a second device side. An AI/ML model includes an information generation portion located in a first device and an information reconstruction portion located in a second device. The second device may be a network device, the first device is a terminal equipment; the second device may further be a terminal equipment, the first device is a network device.

FIG. 6 is a schematic diagram of a method for acquiring data in the embodiments of the present disclosure. As shown in FIG. 6, the method includes:

601, the second device acquires first data X inputted into the information generation portion; and

602, the second device acquires second data Y corresponding to the first data X and outputted from the information generation portion.

It should be noted that the above FIG. 6 is only schematic description of the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 6.

In some embodiments, AI/ML models may be run respectively for different signal processing functions. For example, for AI/ML models for CSI reporting, there may have different model group identifiers, model identifiers, and version identifiers. For AI/ML models for beam management, there may have additional model group identifiers, model identifiers, and version identifiers.

In some embodiments, the AI/ML model is a two-sided model and has a model identifier and a version identifier, the information generation portion and the information reconstruction portion of the same AI/ML model use the same model identifier and version identifier, and the information generation portion and the information reconstruction portion have different sub-identifiers.

For example, one two-sided model has one model identifier (which may be an one-level identifier or a multi-level identifier) and version identifier, which may distinguish two different two-sided models (for example, there are differences in the number of layers, number of nodes, hyper-parameters, input and output signal formats, pre-processing and post-processing configurations, etc.). The information generation portion and the information reconstruction portion of the same two-sided model have the same model identifier and version identifier. In addition, a sub-identifier may be used to distinguish it is an information generation portion or an information reconstruction portion.

For example, the model identifier is an one-level identifier XXXXX (single-level model identifier).Vxx (version identifier);

For another example, the model identifier is a multi-level identifier: first level XXX-second level XXXX-nth level XXXX (multi-level model identifier). Vxxx (version identifier).

For a further example, in addition to the model identifier (including the version identifier), a 1-bit sub-identifier may be used to distinguish a generation portion and a reconstruction portion. For example, the information generation portion is: model identifier. version identifier. 0; the information reconstruction portion is model identifier. version identifier. 1.

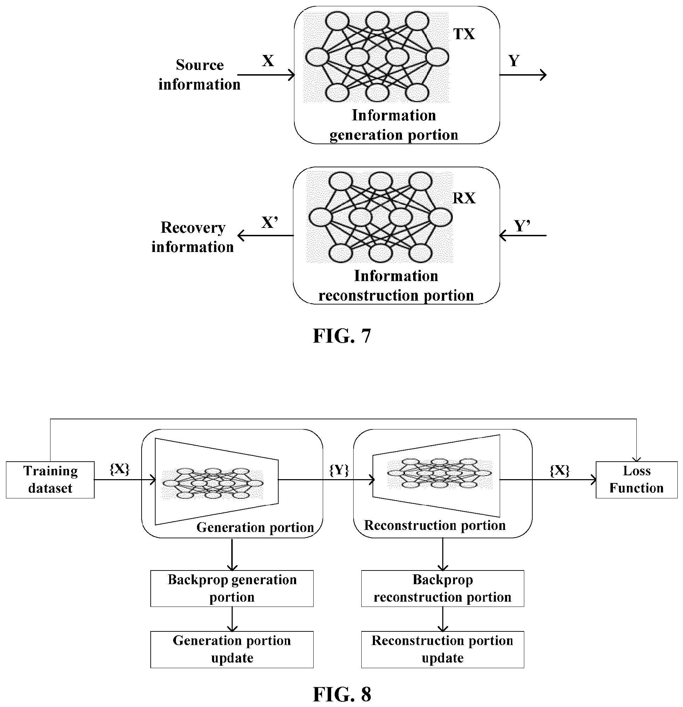

FIG. 7 is a schematic diagram of data in the embodiments of the present disclosure. As shown in FIG. 7, for a two-sided model, although it is deployed separately at the transmitting side and the receiving side, inputs and outputs of the information generation portion correspond to outputs and inputs of the information reconstruction portion. Ideally,

$$X = X^{'} \; ; \; Y = Y^{'}$$

Table. 1 shows an example of data in the embodiments of the present disclosure.

Table 1

|  | Input of the information generation portion | Output of the information generation portion | Input of the information reconstruction portion | Output of the information reconstruction portion |
|---|---|---|---|---|
| Model identifier | *{ X(data index|data) }* | *{ Y(data index|data) }* | *{ Y(data index/data) }* | *{ X(data index|data) }* |

As shown in Table 1, for a two-sided model corresponding to a model identifier (including a version identifier), its information generation portion and the information reconstruction portion have the same (or similar) dual training datasets. That is, an information generation portion input dataset {X} and a corresponding output dataset {Y} may be shared to the information reconstruction portion, and the information reconstruction portion inputs {Y} and outputs {X}. So, this feature may be used for separate training.

In some embodiments, the second device inputs the second data Y into the information reconstruction portion and trains the information reconstruction portion by taking the first data X as label data.

Thereby, suitable data may be obtained at a smaller cost to support a two-sided network model architecture.

In some embodiments, the information generation portion in the first device and the information reconstruction portion in the second device perform training by using the first data X and the second data Y respectively; when the first data X are inputted, the trained information generation portion in the first device outputs data that are the second data Y or data that are similar to the second data Y, and when the second data Y are inputted, the trained information reconstruction portion in the second device outputs data that are the first data X or data similar to the first data X.

For example, for a two-sided model, an information reconstruction portion in a network device and an information generation portion in a terminal equipment perform training by using the same common paired datasets {X} and {Y} respectively. After training, when {Y} is inputted, the information reconstruction portion of the network device outputs {X} or one that is similar to {X}; when {X} is inputted, the information generation portion of the terminal equipment outputs {Y} or one that is similar to {Y};

where, a format of X and Y is predefined or configured, such as a symbol format, the number of bits, etc.

In some embodiments, the first data X and the second data Y are paired datasets, the paired datasets having model identification information. One first data X may correspond to multiple second data Y.

For example, one X may correspond to multiple Y (e.g. Y1, Y2), and a format of Y1, Y2 is predefined or configured. Paired datasets are: {{X}{Y1}}, {{X}{Y2}}, or {{X}{Y1}{Y2}}, for example, may be used in multiple first devices and one second device.

FIG. 8 is a schematic diagram of j oint training in the embodiments of the present disclosure.

In some embodiments, as shown in FIG. 8, in order to enable a two-sided model to work jointly, a model of the information generation portion needs to perform joint training with a model of the information reconstruction portion. After multiple iterations, backward propagation, parameter upgrading and other steps, the training is completed.

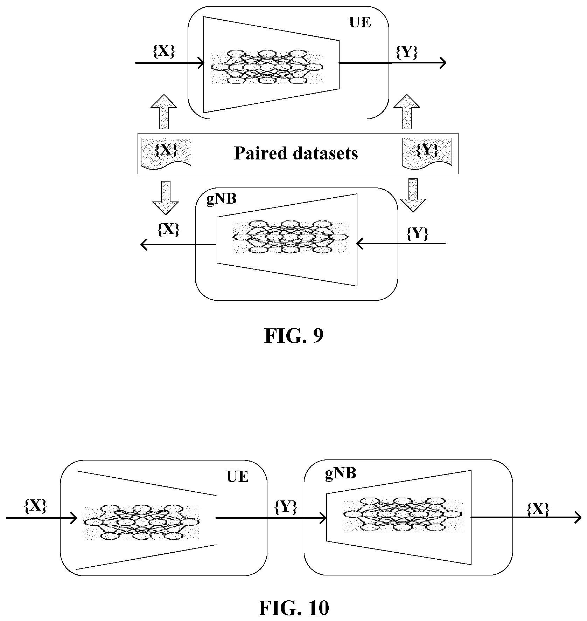

FIG. 9 is a schematic diagram of separate training in the embodiments of the present disclosure.

In order to realize the separate training of the two-sided model, the first data X and the second data Y are prepared in advance, X and Y are in a paired relation, multiple X and corresponding multiple Y constitute paired datasets, wherein a format of X and Y are predefined or configured, such as a symbol format, the number of bits, etc. One X may correspond to multiple Y (e.g. Y1, Y2), and a format of Y1, Y2 is predefined or configured. For example, paired datasets are: {{X}{Y1}}, {{X}{Y2}}, or {{X}{Y1}{Y2}}. As shown in FIG. 9, the prepared datasets may be extracted from various typical channels through simulation analysis.

For example, one X may correspond to multiple Y (e.g. Y1, Y2), and a format of Y1, Y2 is predefined or configured, such as a symbol format, the number of bits, the number of corresponding ports, port configuration, a data length, a dimension, etc. Paired datasets are: {{X}{Y1}}, {{X}{Y2}}, or {{X}{Y1}{Y2}}, for example, may be used in multiple first devices and one second device.

In the example shown in FIG. 9, {X} of the common paired datasets serves as input data for a UE side model portion, and {Y} serves as reference data or label data for the output. The purpose of training is to make the output be Y or very close to Y when each X is inputted after training. The same datasets are also shared to a gNB side model portion, {Y} serves as input data of the gNB side model portion, {X} serves as reference data or label data for the output. The purpose of training is to make the output be X or very close to X when each Y is inputted after training.

Because the above paired datasets are used to train the UE model portion (for example, called the information generation portion) and the gNB model portion (for example, called the information reconstruction portion) respectively, and based on the above training requirements, after the separate training is completed, when they are combined to work together, at least for the input dataset {X}, the same data recovery effect may be achieved as the joint training.

FIG. 10 is a schematic diagram after separate training in the embodiments of the present disclosure. As shown in FIG. 10, when the dataset {X} is sufficient to characterize the features of a wireless channel applied by a model, it can work very well when it is applied to a communication system.

In addition, by updating the common paired datasets, after the model is deployed to the network device and the terminal equipment, during running, model retraining or fine tuning may be performed respectively using datasets based on channel updates, so as to ensure adaptability of the model to a new application environment. By a method for constantly updating the paired datasets and using them to train paired two-sided models respectively, a difficulty of joint training of two-sided models may be solved.

Said method may be used for initial training, retraining, off-line training, online training, fine tuning and other training processes of a model. In another situation, if it is not possible to establish a common-dataset-based ecosystem among manufactures, online-based and air interface-based approaches may be adopted.

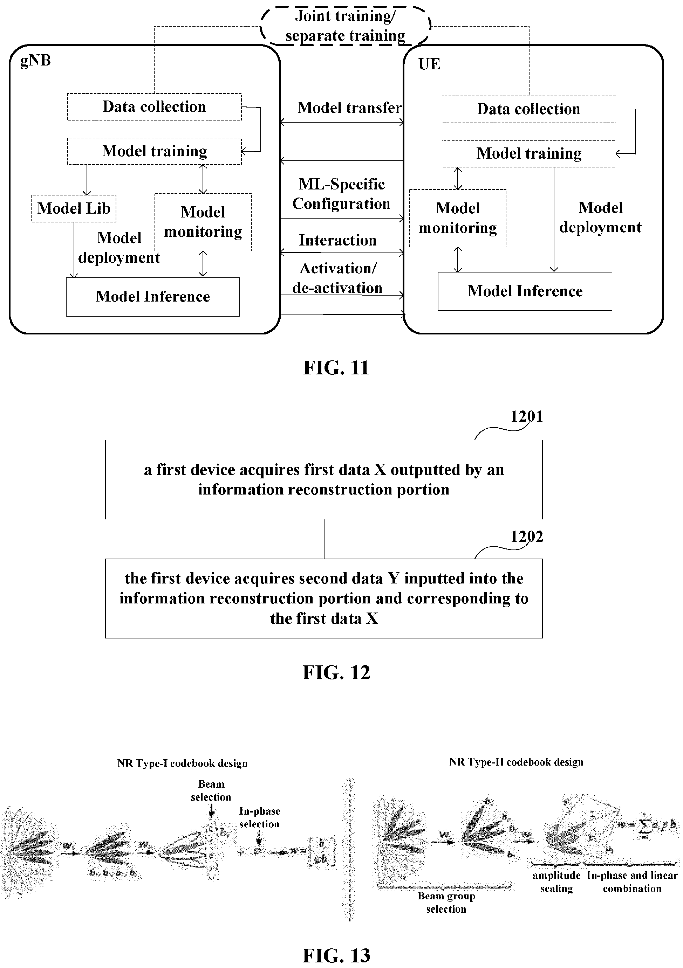

FIG. 11 is a schematic diagram of application of a two-sided model in a gNB and a UE in the embodiments of the present disclosure, in which many possible situations are taken into account. For example, when model monitoring finds that the performance is not good, a training process of a model may be started, model portions at both sides perform interactive and independent training based on the above principle of common paired datasets by using newly collected data. The trained model may be used as an updated model after the performance reaches a standard by using an air interface and performance monitoring to perform model inference. This avoids problems faced by joint training and model transmission.

A trained and air interface-tested model may register a channel model ID or a new version ID, which may be uploaded to a core network, a remote server, an OTT server, or transferred to other gNB, and so on.

The above text schematically describes shared data and separate training, etc., the present disclosure is not limited to this. How to acquire data is further described schematically below.

In some embodiments, the first data X are a part or all of data of a specific dataset inputted into the information generation portion, and the second data Y are corresponding data generated after the first data X are inputted into the information generation portion.

For example, the specific dataset may be a dataset that corresponds to a current generation portion model and may be generated based on a predefined rule, or may be a dataset shared by all information generation portion models, such as all possible channel information quantization vectors.

In some embodiments, the second device obtains the first data X and/or the second data Y from interior of the second device or from exterior of the second device according to identification information related to the information generation portion.

For example, the interior of the second device may include memory, disk and other storage devices; the exterior of the second device may include a device connected with the second device, such as a core network, a cloud, a third-party server, an OTT server, a cloud storage device, and so on.

In some embodiments, the identification information related to the information generation portion includes: a model identifier and/or version information to which the information generation portion corresponds, and/or data configuration information of a model to which the information generation portion corresponds. The present disclosure is not limited to this, for example, it may further be other identifier.

In some embodiments, the second data Y are carried by a control channel or a data channel and transmitted via an air interface, or the second data Y are generated via a data index according to a predefined rule, or an index of the second data Y is transmitted by the first device to the second device via an air interface.

In some embodiments, the first data X are pre-stored in the second device, or the first data X are generated via a data index according to a predefined rule, or the first data X are transmitted by the first device to the second device via an air interface, or an index of the first data X is transmitted by the first device to the second device via an air interface.

Description is made below by using some examples. It is assumed that the information generation portion or the information reconstruction portion performs initial training or off-line training. The information generation portion and the information reconstruction portion agree on input data configuration and corresponding output data configuration. The configurations may include data dimensions, formats, etc. Then, the training is performed respectively, and a specific training method is not limited.

For example, the information generation portion performs training first, and in order to facilitate training, during the process, it may perform training together with model portions that are paired with it. After the training is completed, the information generation portion shares all or part of its input datasets and corresponding final output datasets to the reconstruction portion. The information reconstruction portion uses the output datasets as inputs and the input datasets as label sets for outputs. Upon training, its model outputs approximate the label datasets. In this way, model pairing of the information reconstruction portion to the information generation portion is completed.

The reverse is also similar, the information reconstruction portion may be trained first, a model portion paired with it may be used during its training process to facilitate training. After the training is completed, the information reconstruction portion shares all or part of its input and output datasets to the information generation portion for the training of the information generation portion, so that the outputs of the information generation portion approximates the inputs of the information reconstruction portion.

The above process may be completed in an offline manner. Preceding and later descriptions of said training are only for the convenience of narration, and may also be performed on both sides at the same time. Input and output formats of the information generation portion and the information reconstruction portion are agreed or predefined, the input and output formats may be aligned, so that the two may be trained respectively. After training, all or part of the input and output datasets may be shared with each other to form an aggregated dataset for retraining at both sides.

For another example, the input dataset of the information generation portion and the output dataset of the information reconstruction portion use a common dataset (the common dataset may be agreed by both parties in advance, or pre-stored, or the dataset may be generated by a predefined method, etc.). In this way, the information generation portion uses the common dataset as an input dataset for training, and shares its output dataset to the information reconstruction portion after the training is completed. As the input dataset of the information reconstruction portion, the information reconstruction portion takes the common dataset as a label dataset. The training purpose is to make the output dataset under the input dataset approximate the label dataset. Pairing of the information reconstruction portion to the information generation portion is completed. Process of pairing of the information generation portion to the information reconstruction portion is similar and is not repeated here.

In the embodiments of the present disclosure, a dataset sharing mode of the information generation portion and the information reconstruction portion is not limited, and may be realized via remote network transmission and other means. After completion of pairing by using the above possible modes, the corresponding information generation portion and information reconstruction portion form a two-sided model.

After experiencing a relevant RAN4 test or other predefined tests, when the performance meets requirements, a corresponding model ID and version ID may be registered at a network side. A dataset for training used by it and a common dataset may be bound to the model ID. Thereby, suitable data may be obtained at a smaller cost to support a two-sided network model architecture. The dataset may further be uploaded to the network side. By sharing the model ID, a purpose of sharing a dataset may also be achieved.

For a network device and a terminal equipment of an AI/ML model that has been deployed, a problem of model mismatch will be encountered in running. For example, after a terminal equipment moves to a cell, the network side or terminal side finds that two-sided model IDs corresponding to the two are different, or the IDs are the same but version information is different. Pairing may be achieved by an air interface or other means.

For example, X and Y may be shared. A transmitting device (terminal equipment or network device) may transmit all or part of the input dataset {X(data configuration, data index|data)} and the output data {Y(data configuration, data index|data)} of the information generation portion to a receiving device (network device or terminal equipment) via an air interface. The dataset may be carried via a control channel or a data channel.

The information reconstruction portion of the receiving device uses {Y(data configuration, data index|data)} as its input data to train its neural network model, and adopts {X(data configuration, data index|data)} as label data, and a purpose of the training is to make that when the information reconstruction portion inputs y(data configuration, data index|data), where y(data configuration, data index|data) is a sample in {Y(data configuration, data index|data)}, the output of the information reconstruction portion is equal to or approximately equal to x(data configuration, data index|data), where x(data configuration, data index|data) is a sample in {X(data configuration, data index |data)}.

Through the above mode, the information generation portion may remain unchanged, and a model of the information reconstruction portion may be retrained and updated. If the performance of the model retraining meets requirements, for example after or without further testing via an air interface, the information reconstruction portion marks a model corresponding to the retraining and update as the model ID (including version identifier).

For another example, Y may be shared. A transmitting device (such as a terminal equipment or a network device) may transmit all or part of datasets of the information generation portion for output {Y(data configuration, data index|data)} whose input is {X(data configuration, data index|data)} to a receiving device (such as a network device or a terminal equipment) via an air interface. The dataset may be carried via a control channel or a data channel.

The information reconstruction portion of the receiving device uses {Y(data configuration, data index|data)} as its input data to train its neural network model, and adopts {X(data configuration, data index|data)} as label data, and a purpose of the training is to make that when the reconstruction portion inputs y(data configuration, data index|data), where

*y*(data configuration, data index|data) is a sample in {*Y*(data configuration, data index|data)}, the output of the information reconstruction portion is equal to or approximately equal to *x*(data configuration, data index|data), where *x*(data configuration, data index|data) is a sample in {*X*(data configuration, data index|data)}.

For all or part of sets of {*X*(data configuration, data index|data)} corresponding to all or part of sets of {*Y*(data configuration, data index|data)}, a mode for acquiring a receiving device may have been stored on the receiving device, acquired via a model ID, or acquired from a remote server via a model ID, or, corresponding data is generated by a data index according to a predefined rule.

Through the above mode, the information generation portion may remain unchanged, and a model of the information reconstruction portion may be retrained and updated. If the performance of the model retraining meets requirements, after further testing via (or without) an air interface, the information reconstruction portion may mark a model corresponding to the retraining and update as the model ID (including version identifier).

For another example, a transmitting device (such as a terminal equipment or a network device) transmits a model ID (including a version) corresponding to the information generation portion, and/or input data configuration information corresponding to the model to a receiving device (such as a network device or a terminal equipment) via an air interface. The model ID and/or the input data configuration information corresponding to the model may be carried via a control channel or data channel. If the model ID of the information reconstruction portion of the receiving device is inconsistent with that of the information generation portion, the receiving device may obtain {*Y*(data configuration, data index|data)} and {*X*(data configuration, data index|data)} corresponding to the model ID of the information generation portion and/or the input data configuration information of the model by using its memory, or, may obtain by using the model ID of the information generation portion and/or the input data configuration information of the model from a remote server. Or, {*Y*(data configuration, data index|data)} corresponding to the model ID of the information generation portion is obtained from a memory or downloaded from a remote server, and for {*X*(data configuration, data index|data)}, corresponding data are generated by a data index according to a predefined rule.

Through the above mode, the information generation portion may remain unchanged, and a model of the information reconstruction portion may be retrained and updated. If the performance of the model retraining meets requirements, after further testing via (or without) an air interface, the information reconstruction portion marks a model corresponding to the retraining and update as the model ID (including version identifier).

Signaling process in the embodiments of the present disclosure is described below.

In some embodiments, the second device transmits an AI/ML-related capability query to the first device; and the second device receives an AI/ML-related capability response fed back by the first device. The AI/ML-related capability includes at least one of the following: signal processing module information, AI/ML support information, AI/ML model identification information, version information, data configuration information, AI/ML support training capability information, or AI/ML upgrade capability information.

In some embodiments, when the second device determines that the first device has an AI/ML capability but the model identifier and/or version information of the information generation portion is/are different from the model identifier and/or version information of the information reconstruction portion, the second device acquires the first data and/or the second data corresponding to the model identifier and/or version information of the information generation portion of the first device.

In some embodiments, after the information reconstruction portion completes training by using the first data and the second data, the second device sets the model identifier and/or version information of the information reconstruction portion to be identical to the model identifier and/or version information of the information generation portion.

In some embodiments, the second device transmits acknowledgement information to the first device acknowledging that the information generation portion of the first device is available, and/or transmits indication information enabling the information generation portion and/or the information reconstruction portion.

That the information generation portion is deployed in a terminal equipment, and the information reconstruction portion is deployed in a network device is taken as an example.

In one example, for a signal processing module using a two-sided model, the network device makes an AI/ ML-related capability query to the terminal equipment, the query may include one or more of the following: signal processing module information, AI/ML support information, AI/ML model identification information, version information, AI/ML model data configuration information, and so on. The terminal equipment makes corresponding response and reporting.

For example, when the network device finds that a corresponding module reported by the terminal equipment has an AI/ML capability, but a model ID of its information generation portion is different from that of the information reconstruction portion of the network device, the network device may configure the terminal equipment to report: when a predefined X1 dataset or a pre-configured first dataset serves as input of the information generation portion, data configuration information of a Y1 dataset corresponding to output, such as size, structure and other information. A format in which the above information is reported is predefined.

For another example, when the network device finds that a corresponding module reported by the terminal equipment has an AI/ML capability, the model ID of its information generation portion is same as that of the information reconstruction portion of the network device, but their versions are different, the network device configures the terminal equipment to report: when a predefined X11 dataset or a pre-configured first dataset serves as input of the generation portion, data configuration information of a Y11 dataset corresponding to output, such as information including a dataset size, dataset structure information (e.g., multiple dataset blocks), etc. A format in which the above information is reported is predefined.

For example, X11 and Y11 are parts of X1 and Y1, respectively.

The network device configures or schedules the terminal equipment to report the Y1 dataset or Y11 dataset according to data configuration information reported by the terminal equipment. The Y1 dataset or Y11 dataset is included in uplink control information (UCI) or reported by AI/ML data auxiliary information (via an RRC message).

After receiving the Y1 or Y11 dataset reported by the terminal equipment, the network device uses the Y1 or Y11 dataset as input data of its information reconstruction portion. The network device stores X1 or X11 dataset corresponding to the Y1 or Y11 dataset, or the network device may download the corresponding X1 or X11 dataset from a remote server. The information reconstruction portion of the network device uses the X1 or X11 dataset as a label dataset to retrain the information reconstruction portion.

When the performance of the information reconstruction portion reaches a corresponding performance requirement after the above training, the training of the information reconstruction portion ends. The network device stores the trained neural network model and parameters, and takes the model ID and version information of the information generation portion as identifiers of the neural network model and parameters. The network device then notifies the terminal equipment to enable the information generation portion with the model ID and version information.

If the performance of the information reconstruction portion fails to reach the requirement after the above training, the network device may configure or schedule the terminal equipment to report Y2 dataset or Y21 dataset. The Y21 dataset is part of the Y2 dataset. When the performance of the information reconstruction portion reaches a corresponding performance requirement after the above training (a dataset may be continued to be added), the training of the reconstruction portion ends. The network device stores the trained neural network model and parameters, and takes the model ID and version information of the information generation portion as identifiers of the neural network model and parameters. The network device notifies the terminal equipment to enable the information generation portion with the model ID and version information.

If all datasets are reported and trained, the performance of the information reconstruction portion still fails to reach the requirement, the network device informs the terminal equipment that the model ID and version cannot be used.

In another example, for a signal processing module using a two-sided model, the network device makes an AI/ML-related capability query to the terminal equipment, the query may include one or more of the following: signal processing module information, AI/ML support information, AI/ML model identification information, version information, AI/ML model data configuration information, and so on. The terminal equipment makes corresponding response and reporting.

For example, when the network device finds that a module reported by the terminal equipment has an AI/ML capability, but the model ID or version of its information generation portion is different from that of the information reconstruction portion of the network device, the network device uses the model ID and version information of the information generation portion, looks up an input dataset and an output dataset of the information generation portion corresponding to the model ID and version, an input dataset and an output dataset of the information reconstruction portion, or a common two-side dataset.

The network device performs training based on the input and output datasets. When the performance of the information reconstruction portion reaches a corresponding performance requirement after training, the training of the information reconstruction portion ends. The network device stores the trained neural network model and parameters, and takes the model ID and version information of the information generation portion as identifiers of the neural network model and parameters. The network device may notify the terminal equipment to enable the information generation portion with the model ID and version information.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, the second device acquires first data X that are inputted to the information generation portion; and the second device acquires second data Y corresponding to the first data X and outputted from the information generation portion. Thereby, suitable data may be obtained at a smaller cost to support a two-sided network model architecture.

Embodiments of a second aspect

The embodiments of the present disclosure provide a method for acquiring data, which is described from a first device side, the contents same as the embodiments of the first aspect are not repeated.

FIG. 12 is a schematic diagram of a method for acquiring data in the embodiments of the present disclosure, as shown in FIG. 12, the method includes:

1201, a first device acquires first data X outputted by an information reconstruction portion; and
1202, the first device acquires second data Y inputted into the information reconstruction portion and corresponding to the first data X.

It should be noted that the above FIG. 12 is only schematic description of the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 12.

**In** some embodiments, the first device inputs the first data X into the information generation portion and trains the information generation portion by taking the second data Y as label data.

**In** some embodiments, the second data Y are data inputted into the information reconstruction portion and corresponding to the first data X, and the first data X are a part or all of a specific dataset and are generated after the second data Y are inputted into the information reconstruction portion.

**In** some embodiments, the information generation portion in the first device and the information reconstruction portion in the second device perform training by using the first data X and the second data Y respectively; when the first data X are inputted, the trained information generation portion in the first device outputs data that are the second data Y or data that are similar to the second data Y, and when the second data Y are inputted, the trained information reconstruction portion in the second device outputs data that are the first data X or data similar to the first data X.

In some embodiments, the first data X and the second data Y are paired datasets, the paired datasets having model identification information.

In some embodiments, one first data X corresponds to multiple second data Y.

In some embodiments, the first device obtains the second data and/or the first data from interior of the first device or from exterior of the first device according to identification information related to the information reconstruction portion.

In some embodiments, the identification information related to the information reconstruction portion includes: a model identifier and/or version information to which the information reconstruction portion corresponds, and/or data configuration information of a model to which the information reconstruction portion corresponds.

In some embodiments, the second data Y are carried by a control channel or a data channel and transmitted via an air interface, or the second data Y are generated via a data index according to a predefined rule, or an index of the second data Y is transmitted by the second device to the first device via an air interface.

In some embodiments, the first data X are pre-stored in the first device, or the first data X are generated via a data index according to a predefined rule, or the first data X are transmitted by the second device to the first device via an air interface, or an index of the first data X is transmitted by the second device to the first device via an air interface.

In some embodiments, the AI/ML model has a model identifier and a version identifier, the information generation portion and the information reconstruction portion of the same AI/ML model use the same model identifier and version identifier, and the information generation portion and the information reconstruction portion have different sub-identifiers.

How to acquire data is described schematically below by using examples.

For example, a transmitting device (such as a network device or a terminal equipment) may transmit the information reconstruction portion's input { $Y$(data configuration, data index|data)} for output is {$X$(data configuration, data index|data)} to a receiving device (such as a terminal equipment or a network device) via an air interface. The dataset may be carried via a control channel or a data channel.

The information generation portion of the receiving device uses {$X$(data configuration, data index|data)} as its input data to train its neural network model, and adopts {$Y$(data configuration, data index|data)} as label data, and a purpose of the training is to make that when the generation portion inputs $x$(data configuration, data index|data), where $x$(data configuration, data index|data) is a sample in {$X$(data configuration, data index|data)}, the output of the information generation portion is equal to or approximately equal to $y$(data configuration, data index|data), where $y$(data configuration, data index|data) is a sample in {$Y$(data configuration, data index|data)}.

For {$X$(data configuration, data index|data)}, a mode for acquiring a receiving device may have been stored on the receiving device, acquired via a model ID, or acquired from a remote server via a model ID, or, corresponding data is generated by a data index according to a predefined rule.

Through the above mode, the information reconstruction portion may remain unchanged, and a model of the information generation portion may be retrained and updated. If the performance of the model retraining meets requirements, after or without further testing via an air interface, the information generation portion marks a model corresponding to the retraining and update as the model ID (including version identifier).

The above text schematically describes how to acquire data, and for more examples, the embodiments of the first aspect may further be referred to.

In some embodiments, the first device transmits an AI/ML-related capability query to the second device; and the first device receives an AI/ML-related capability response fed back by the second device. The AI/ML-related capability includes at least one of the following: signal processing module information, AI/ML support information, AI/ML model identification information, version information, data configuration information, AI/ML support training capability information, or AI/ML upgrade capability information.

In some embodiments, when the first device determines that the second device has an AI/ML capability but the model identifier and/or version information of the information generation portion is/are different from the model identifier and/or version information of the information reconstruction portion, the first device acquires the first data and/or the second data corresponding to the model identifier and/or version information of the information reconstruction portion of the second device.

In some embodiments, after the information generation portion completes training by using the first data and the second data, the first device sets the model identifier and/or version information of the information generation portion to be identical to the model identifier and/or version information of the information reconstruction portion.

In some embodiments, the first device transmits acknowledgement information to the second device acknowledging that the information reconstruction portion of the second device is available, and/or indication information enabling the information generation portion and/or the information reconstruction portion.

The above text schematically describes a relevant signaling process, and for more examples, the embodiments of the first aspect may further be referred to.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, the first device acquires first data X outputted by the information reconstruction portion; and the first device acquires second data Y inputted into the information reconstruction portion and corresponding to the first data X. Thereby, suitable data may be obtained at a smaller cost to support a two-sided network model architecture.

Embodiments of a third aspect

The embodiments of the present disclosure take CSI generation and reporting as an example, and describe from a network device side. An AI/ML model includes a CSI generation portion located in a terminal equipment and a CSI reconstruction portion located in a network device, the contents same as those in the first and second aspects are not repeated here.

In some embodiments, a common paired dataset utilizes a standard predefined codebook, or a DFT matrix similar to a codebook structure to generate an approximation channel matrix or a channel matrix eigenvector, which greatly reduces the overhead of a dataset, in particular if a dataset needs to be transmitted directly or indirectly via an air interface.

FIG. 13 is an example diagram of building a dataset in the embodiments of the present disclosure, exemplarily showing that a dataset corresponding to channel eigenvectors by using a codebook. For example, for Type2 and its subsequent enhanced version of a codebook, the codebook may approximate a channel matrix eigenvector with high resolution via a linear combination of DFT vectors, and by using the codebook or codebook vectors, a codebook matrix may approximate eigenvectors that need to be fed back, or an eigenvector matrix. When the common paired dataset is built based on the codebook, since a base station and a terminal have a consensus on the codebook or a DFT transformation matrix of similar to the codebook, a purpose that a codebook vector part is generated on its own side may be achieved through a simple indexing mode. In this way, only a bit vector compressed by the CSI generation portion needs to be shared at a two-side model portion, which greatly reduces the overhead.

Table 2

| Table 5.2.2.2.1-2: Supported configurations of $(N_1,N_2)$ and $(O_1,O_2)$ | | |
|---|---|---|
| Number of CSI-RS antenna ports, $P_{CSI\text{-}RS}$ | $(N_1,N_2)$ | $(O_1,O_2)$ |
| 4 | (2,1) | (4,1) |
| 8 | (2,2) | (4,4) |
| | (4,1) | (4,1) |
| 12 | (3,2) | (4,4) |
| | (6,1) | (4,1) |

(continued)

| Table 5.2.2.2.1-2: Supported configurations of ($N_1,N_2$) and ($O_1,O_2$) | | |
|---|---|---|
| Number of CSI-RS antenna ports, $P_{\text{CSI-RS}}$ | ($N_1,N_2$) | ($O_1,O_2$) |
| 16 | (4,2) | (4,4) |
| | (8,1) | (4,1) |
| 24 | (4,3) | (4,4) |
| | (6,2) | (4,4) |
| | (12,1) | (4,1) |
| 32 | (4,4) | (4,4) |
| | (8,2) | (4,4) |
| | (16,1) | (4,1) |

Table 2 schematically shows configuration information of the different number of CSI-RS ports, corresponding to configuration information of a codebook.

Table 3

| Table 5.2.2.2.3-5: Codebook for 1-layer and 2-layer CSI reporting using antenna ports 3000 to 2999+PCSI-RS | |
|---|---|
| Layers | |
| $\upsilon=1$ | $$W^{(1)}_{q_1,q_2,n_1,n_2,p_1^{(1)},p_1^{(2)},i_{2,1,1}} = W^1_{q_1,q_2,n_1,n_2,p_1^{(1)},p_1^{(2)},i_{2,1,1}}$$ |
| $\upsilon=2$ | $$W^{(2)}_{q_1,q_2,n_1,n_2,p_1^{(1)},p_1^{(2)},i_{2,1,1},p_2^{(1)},p_2^{(2)},i_{2,1,2}} = \frac{1}{\sqrt{2}}\left[ W^1_{q_1,q_2,n_1,n_2,p_1^{(1)},p_1^{(2)},i_{2,1,1}} \quad W^2_{q_1,q_2,n_1,n_2,p_2^{(1)},p_2^{(2)},i_{2,1,2}} \right]$$ |

where

$$W^l_{q_1,q_2,n_1,n_2,p_l^{(1)},p_l^{(2)},c_l} = \frac{1}{\sqrt{N_1 N_2 \sum_{i=0}^{2L-1}\left(p_{l,i}^{(1)} p_{l,i}^{(2)}\right)^2}}\left[ \begin{array}{c} \sum_{i=0}^{L-1} v_{m_1^{(i)},m_2^{(i)}} p_{l,i}^{(1)} p_{l,i}^{(2)} \varphi_{l,i} \\ \sum_{i=0}^{L-1} v_{m_1^{(i)},m_2^{(i)}} p_{l,i+L}^{(1)} p_{l,i+L}^{(2)} \varphi_{l,i+L} \end{array} \right],$$

$l$=12, ,

and the mappings from $i_1$ to $q_1$, $q_2$, $n_1$, $n_2$, $p_1^{(1)}$, and $p_2^{(1)}$, and from $i_2$ to $i_{2,1,1}$, $i_{2,1,2}$, $p_1^{(2)}$ and $p_2^{(2)}$ are as described above, including the ranges of the constituent indices of $i_1$ and $i_2$.

Table 3 schematically describes PMI of codebook type2. Through PMI, i.e, such indexes $i_1$, $q_1$, $q_2$, $n_1$, $n_2$, ..., a codebook vector or a codebook matrix may be built, and principles of other types of codebooks are similar, relevant technologies may be referred to, without further description here.

The above text schematically describes a codebook or a codebook vector, etc., the present disclosure is not limited to this.

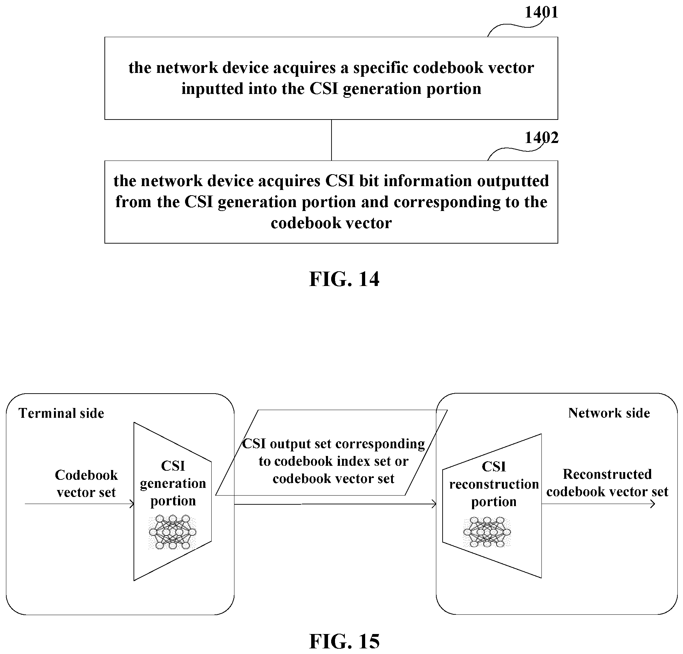

FIG. 14 is a schematic diagram of a method for acquiring data in the embodiments of the present disclosure, as shown in FIG. 14, the method includes:

1401, the network device acquires a specific codebook vector inputted into the CSI generation portion, and

1402, the network device acquires CSI bit information outputted from the CSI generation portion and corresponding to the codebook vector.

It should be noted that the above FIG. 14 is only schematic description of the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 14.

In some embodiments, the AI/ML model is a two-sided model and has a model identifier and a version identifier; the CSI generation portion and the CSI reconstruction portion of the two-sided model have the same model identifier and version identifier, and the CSI generation portion and the CSI reconstruction portion have different sub-identifiers.

For example, a terminal equipment that includes the CSI generation portion AE-x and a network device that includes the CSI reconstruction portion DE-y are not jointly trained. In order to realize AI/ML-based CSI feedback and recovery, it is necessary to perform further training and parameter adjustment on a network model of at least one side before AE-x and DE-y work jointly, so that non-paired AE-x and DE-y may realize joint working that meets a communication performance requirement.

In some embodiments, the network device inputs the CSI bit information into the CSI reconstruction portion and trains the CSI reconstruction portion by taking the codebook vector as label data.

In some embodiments, the codebook vector (X) is data inputted to the CSI generation portion; the CSI bit information (Y) is a bit sequence generated after the codebook vector (X) is inputted to the CSI generation portion.

For example, the codebook vector may be shown in Table 4:

Table 4

| Table 5.2.2.2.5-5: Codebook for 1-layer. 2-layer, 3-layer and 4-layer CSI reporting using antenna ports 3000 to 2999+$P_{\text{CSI-RS}}$ | |
|---|---|
| Layers | |
| $\upsilon = 1$ | $$W^{(1)}_{q_1,q_2,n_1,n_2,n_{3,1},p^{(1)}_1,p^{(2)}_1,i_{2,5,1},t} = W^1_{q_1,q_2,n_1,n_2,n_{3,1},p^{(1)}_1,p^{(2)}_1,i_{2,5,1},t}$$ |
| $\upsilon = 2$ | $$W^{(2)}_{q_1,q_2,n_1,n_2,n_{3,1},p^{(1)}_1,p^{(2)}_1,i_{2,5,1},n_{3,2},p^{(1)}_2,p^{(2)}_2,i_{2,5,2},t}$$ $$= \frac{1}{\sqrt{2}}\left[ W^1_{q_1,q_2,n_1,n_2,n_{3,1},p^{(1)}_1,p^{(2)}_1,i_{2,5,1},t} \quad W^2_{q_1,q_2,n_1,n_2,n_{3,2},p^{(1)}_2,p^{(2)}_2,i_{2,5,2},t} \right]$$ |
| $\upsilon = 3$ | $$W^{(3)}_{q_1,q_2,n_1,n_2,n_{3,1},p^{(1)}_1,p^{(2)}_1,i_{2,5,1},n_{3,2},p^{(1)}_2,p^{(2)}_2,i_{2,5,2},n_{3,3},p^{(1)}_3,p^{(2)}_3,i_{2,5,3},t}$$ $$= \frac{1}{\sqrt{3}}\left[ W^1_{q_1,q_2,n_1,n_2,n_{3,1},p^{(1)}_1,p^{(2)}_1,i_{2,5,1},t} \quad W^2_{q_1,q_2,n_1,n_2,n_{3,2},p^{(1)}_2,p^{(2)}_2,i_{2,5,2},t} \quad W^3_{q_1,q_2,n_1,n_2,n_{3,3},p^{(1)}_3,p^{(2)}_3,i_{2,5,3},t} \right]$$ |
| $\upsilon = 4$ | $$W^{(4)}_{q_1,q_2,n_1,n_2,n_{3,1},p^{(1)}_1,p^{(2)}_1,i_{2,5,1},n_{3,2},p^{(1)}_2,p^{(2)}_2,i_{2,5,2},n_{3,3},p^{(1)}_3,p^{(2)}_3,i_{2,5,3},n_{3,4},p^{(1)}_4,p^{(2)}_4,i_{2,5,4},t}$$ $$= \frac{1}{2}\left[ W^1_{q_1,q_2,n_1,n_2,n_{3,1},p^{(1)}_1,p^{(2)}_1,i_{2,5,1},t} \quad W^2_{q_1,q_2,n_1,n_2,n_{3,2},p^{(1)}_2,p^{(2)}_2,i_{2,5,2},t} \quad W^3_{q_1,q_2,n_1,n_2,n_{3,3},p^{(1)}_3,p^{(2)}_3,i_{2,5,3},t} \quad W^4_{q_1,q_2,n_1,n_2,n_{:}} \right.$$ |

$$W^l_{q_1,q_2,n_1,n_2,n_{3,l},p^{(1)}_l,p^{(2)}_l,i_{2,5,l},t} = \frac{1}{\sqrt{N_1 N_2 \gamma_{t,l}}} \begin{bmatrix} \sum_{i=0}^{L-1} v_{m^{(i)}_1,m^{(i)}_2} p^{(1)}_{l,0} \sum_{f=0}^{M_\upsilon-1} y^{(f)}_{t,l} p^{(2)}_{l,i,f} \varphi_{l,i,f} \\ \sum_{i=0}^{L-1} v_{m^{(i)}_1,m^{(i)}_2} p^{(1)}_{l,1} \sum_{f=0}^{M_\upsilon-1} y^{(f)}_{t,l} p^{(2)}_{l,i+L,f} \varphi_{l,i+L,f} \end{bmatrix},$$

Where $l = 1,2,3,4$,

$$\gamma_{t,l} = \sum_{i=0}^{2L-1} \left( p^{(1)}_{l,\left\lfloor \frac{i}{L} \right\rfloor} \right)^2 \left| \sum_{f=0}^{M_\upsilon-1} y^{(f)}_{t,l} p^{(2)}_{l,i,f} \varphi_{l,i,f} \right|^2$$

and the mappings from $i_1$ to $q_1$, $q_2$, $n_1$, $n_2$, $n_{3,1}$, $n_{3,2}$, $n_{3,3}$, $n_{3,4}$, and from $i_2$ to $i_{2,5,1}$, $i_{2,5,2}$, $i_{2,5,3}$, $i_{2,5,4}$, $p^{(1)}_1$, $p^{(1)}_2$, $p^{(1)}_3$ and $p^{(1)}_4$, $p^{(2)}_1$, $p^{(2)}_2$, $p^{(2)}_3$ and $p^{(2)}_4$ are as described above, including the ranges of the constituent indices of $i_1$ and $i_2$.

Table 4 is a codebook generation table of eType, a codebook vector or codebook matrix may also be generated based on this Table by using corner mark indexes of W. For the specific content of various codebooks of NR, please refer to 3GPP 38.214.

In some embodiments, the CSI bit information is carried by a control channel or a data channel and transmitted via an air interface, and/or, the codebook vector is generated via a data index according to a predefined rule.

For example, based on a predefined precoding codebook such as Type 1, Type2, eType 2 codebook and other NR-defined codebooks, a precoding vector set $\{V_{AE-x}(i1, i2, ...,in)\}$ generated by using a codebook serves as inputs of an AI/ML model of a CSI generation portion AE-x, $\{C_{AE-x}(i1, i2, .., in)\}$ is a corresponding output bit sequence set. $(i1, i2, ..., in)$ is an index of a corresponding codebook, or called PMI, or called an indication sequence, according to definitions of different types of codebooks, here is just a schematic description.

FIG. 15 is an example diagram of acquiring data by a CSI reconstruction portion in the embodiments of the present disclosure.

A terminal equipment containing a CSI generation portion AE-x transmits a sequence set or PMI set $\{$ x1, $x2$, ..., $xn\}$ corresponding to a generation portion input sequence set $\{V_{AE-x}(x1,x2, ..., xn)\}$, and a corresponding output sequence $\{C_{AE-x}(x1, x2, .., xn)\}$ to a network device containing a CSI reconstruction portion DE-y. DE-y takes $\{C_{AE-x}(x1, x2, .., xn)\}$ as its input sequence set, because the codebook sequence set or PMI set $\{x1, x2, .., xn\}$ has been received, DE-y may generate a corresponding codebook vector set $\{V_{AE-x}(x1, x2, ..., xn)\}$ according to a generation rule of a corresponding codebook of NR.

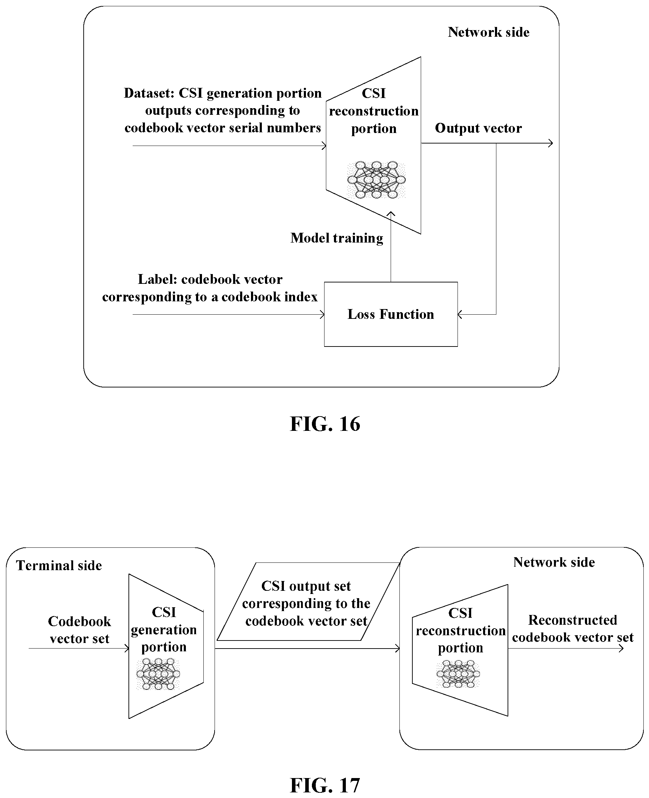

FIG. 16 is an example diagram of training by a CSI reconstruction portion in the embodiments of the present disclosure.

DE-y train its AI/ML model by using$\{C_{AE-x}(x1, x2, .., xn)\}$ and $\{V_{AE-x}(i1, i2, ...,in)\}$ as datasets. The purpose of training is that when the input is $C_{AE-x}(x1, x2, .., xn)$, an output vector approximates $V_{AE-x}(i1, i2, ..., in)$. After the training is completed, a pairing process of AE-x and DE-y is completed.

In some embodiments, the network device obtains the CSI bit information and/or the codebook vector from interior of the network device or from exterior of the network device according to identification information related to the CSI generation portion.

In some embodiments, the identification information related to the CSI generation portion includes: a model identifier and/or version information to which the CSI generation portion corresponds, and/or data configuration information of a model to which the CSI generation portion corresponds, and/or a data index of the CSI generation portion, and/or an indication sequence of a codebook vector or DFT vector of the CSI generation portion.

For example, when the network device finds that the model ID or version of its CSI reconstruction portion does not match the model ID or version of the CSI generation portion of the terminal equipment, corresponding input and output datasets are obtained according to the model ID or version information of the CSI generation portion. A dataset corresponding to the model ID and version may be obtained from internal storage or from a remote server, etc. the dataset is, for example, a codebook sequence set $\{$ x1, $x2$, ..., $xn$ $\}$ and an output set $\{C_{AE-x}(x1, x2, .., xn)\}$ of the CSI generation portion. Both of them are bit sequences, so the amount of storage is greatly reduced.

Based on $\{x1, x2, ..., xn\}$, a codebook vector $\{V_{AE-x}(x1, x2, ..., xn)\}$ may be generated according to a corresponding generation rule. Thereby, training of the CSI reconstruction portion may be performed. After that, the model ID and version information of the CSI generation portion are used to label corresponding model parameters when the training of the CSI reconstruction portion is completed.

FIG. 17 is another example diagram of acquiring data by a CSI reconstruction portion in the embodiments of the present disclosure.

Based on a standard defined codebook such as Type 1, Type2, eType 2 codebook and other NR-defined codebooks, a precoding vector set $\{V_{AE-x}(i1, i2, ..., in)\}$ generated by using a codebook serves as inputs of an AI/ML model of a CSI generation portion AE-x, $\{C_{AE-x}(i1, i2, .., in)\}$ is a corresponding output bit sequence set. $(i1, i2, ..., in)$ is an index sequence, or an indication sequence, or PMI of a corresponding codebook, an arrangement order of which is predefined or pre-configured, or configured. A terminal equipment containing a CSI generation portion AE-x transmits an output sequence $\{C_{AE-x}(i1, i2, .., in)\}$ to a network device containing a CSI reconstruction portion DE-y.

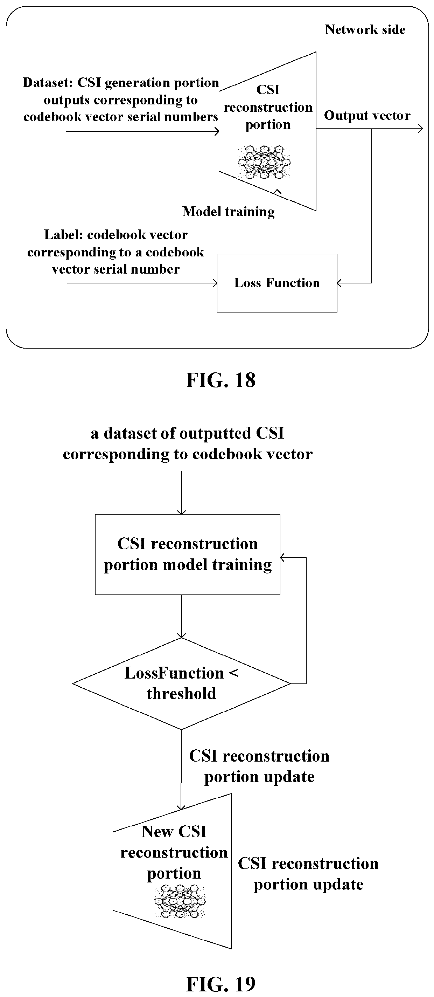

FIG. 18 is a further example diagram of training by a CSI reconstruction portion in the embodiments of the present disclosure. FIG. 19 is a further example diagram of training by a CSI reconstruction portion in the embodiments of the present disclosure.

DE-y takes $\{C_{AE-x}(i1, i2, .., in)\}$ as its input sequence set, because an order $(i1, i2, .., in)$ of codebook indexes or flags is known, DE-y may generate a corresponding codebook vector set $\{V_{AE-x}(i1, i2, ..., in)\}$ according to a generation rule of a corresponding codebook of NR. DE-y train its AI/ML model by using $\{C_{AE-x}(i1, i2, .., in)\}$ and $\{V_{AE-x}(i1, i2, ..., in)\}$ as datasets. The purpose of training is that when the input is $C_{AE-x}(i1, i2, .., in)$, an output vector approximates $V_{AE-x}(i1, i2, ..., in)$. After the training is completed, a pairing process of AE-x and DE-y is completed.

In some embodiments, the network device transmits a model training indication and configuration information for a model identifier to the terminal equipment; the configuration information including an indication sequence of a codebook vector or a DFT matrix vector for training; the network device receives an indication sequence for indicating a codebook vector or a DFT vector transmitted by the terminal equipment, and a CSI generation portion output bit sequence corresponding to the vector.

In some embodiments, the network device generates a corresponding codebook vector or DFT matrix vector based on the indication sequence and according to a predefined rule.

In some embodiments, the network device receives a resource request from the terminal equipment; and the network device configures one or more uplink resources for the terminal equipment, such that the terminal equipment transmits the indication sequence and the CSI generation portion output bit sequence.

The above text schematically describes how the CSI reconstruction portion acquires data and how to perform training, and a signaling process is schematically described below.

In some embodiments, the network device transmits an AI/ML-related capability query to the terminal equipment; and the network device receives an AI/ML-related capability response fed back by the terminal equipment. The AI/ML-related capability includes at least one of the following: signal processing module information, AI/ML support information, AI/ML model identification information, version information, data configuration information, AI/ML training capability information, or AI/ML upgrade capability information.

In some embodiments, when the network device determines that the terminal equipment has an AI/ML capability but the model identifier and/or version information of the CSI generation portion is/are different from the model identifier and/or version information of the CSI reconstruction portion, the network device indicates or configures the terminal equipment to transmit a CSI bit sequence and/or a corresponding codebook vector for training, corresponding to the model identifier and/or version information of the CSI generation portion.

In some embodiments, after the CSI reconstruction portion completes training by using the CSI bit information and the codebook vector, the network device sets the model identifier and/or version information of the CSI reconstruction portion to be identical to the model identifier and/or version information of the CSI generation portion.

In some embodiments, the network device transmits indication information enabling the CSI generation portion and/or the CSI reconstruction portion to the terminal equipment, and/or transmits acknowledgement information acknowledging that the CSI generation portion may be used.

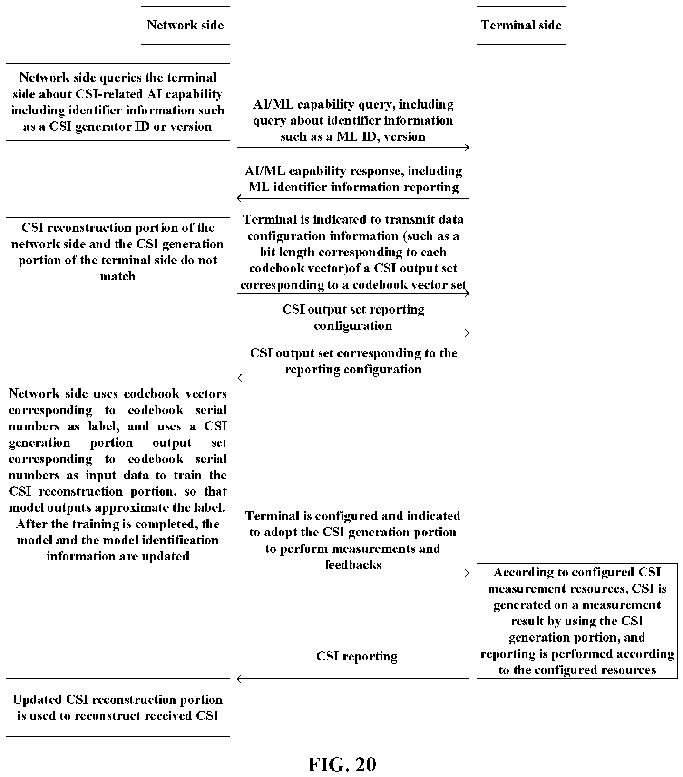

FIG. 20 is a signaling schematic diagram of training by a CSI reconstruction portion in the embodiments of the present disclosure.

As shown in FIG. 20, the network side lets the terminal side report an AI/ML capability of CSI feedback, which may include an inquiry of model information such as AI/ML model ID and version, etc. The terminal side reports relevant capability information, including an indication of model information, such as an AI/ML model ID, version, used by its CSI generation portion. If the network side has a CSI reconstruction portion model with a corresponding ID and version, it enters a joint work phase.

Otherwise, if the network side knows that the ID and version of the AI/ML model used by the CSI generation portion of the terminal side do not match one or more CSI reconstruction portions at the network side, it indicates that AI/ML models at both sides of communication cannot work jointly. The network side may configure the terminal side to report corresponding data and train the CSI reconstruction portion.

The network side may query format information related to a bit sequence outputted by the CSI generation portion of the terminal side, and the terminal side reports output bit information of its CSI generation portion according to a predefined format, such as the number of output information bits corresponding to each codebook vector or matrix.

As shown in FIG. 20, the network side may indicate the terminal side to transmit data configuration information (such as a bit length corresponding to each codebook vector) of a CSI output set corresponding to a codebook vector set, and transmit CSI output set reporting configuration. The terminal side may report the corresponding CSI output set according to the configuration/indication.

As shown in FIG. 20, the network side uses codebook vectors corresponding to codebook serial numbers as label data, and uses CSI generator outputs corresponding to the codebook serial numbers as input data to train a model of the CSI reconstruction portion, so that the model outputs approximate the label data. After training of the model is completed, the model is updated and the model flag information is updated.

As shown in FIG. 20, the network side may configure and indicate the terminal side to use the CSI generation portion to perform CSI measurement and feedback; according to a configured CSI measurement resource, the terminal side generates CSI for a measurement result by using the CSI generation portion, and reports the CSI according to the configured resource. The network side may reconstruct received CSI by using the updated CSI reconstruction portion.

It should be noted that the above FIG. 20 is only schematic description of the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 20.

For a CSI two-sided model, the CSI generation portion may take a channel matrix based on channel estimation as an input, and take one or more eigenvectors of the channel matrix after the channel estimation as an input. The number of input eigenvectors may be selected according to a rank, or the eigenvectors may be based on a single layer.

Similarly, for a dataset based on a codebook vector, the CSI generation portion or CSI reconstruction portion needs to communicate possible configuration information of inputs and outputs of the CSI generation portion or CSI reconstruction portion, such as input data length, input data dimension, and so on, during the process of acquiring the dataset, retraining and fine tuning.

In some embodiments, a format and/or size of the CSI is/are predefined, or the format and/or size of the CSI is/are configured by the network device.

For example, the network side needs to know through inquiry that the CSI generation portion may generate multiple CSI bit lengths, and the network side may configure the terminal side to feed back outputs of the CSI generation portion with a certain bit length, or multiple bit lengths, or outputs of the CSI generation portion with all bit lengths.

For example, Table 5 is an example of information related to the CSI generation portion that needs to be fed back by the terminal side.

Table 5

| Codebook indication bit (PMI) | Codebook vector | CSI generation portion Bit 1 | CSI generation portion Bit 2 | CSI generation portion Bit 3 |
|---|---|---|---|---|
| A1 | A2 | A3 | A4 | A5 |
| B1 | B2 | B3 | B4 | B5 |

In some embodiments, the network device extends the codebook vector and takes the expanded codebook vector as the label data.

For example, based on codebooks already defined by NR, such as codebooks defined by Rel-15, 16, 17, 18, generated codebook vectors may not be enough to complete training of an AI/ML network, and more datasets are needed for training. Or, a codebook set that is more suitable for the CSI generation portion and the CSI reconstruction portion needs to be selected.

In some embodiments, in the expanded codebook vector, the number of selectable beams of W1 is up to 6, 8, 10, 12, 16; W2 has a mapping angle of up to 5 bits and an amplitude of up to 5 bits.

For example, an existing codebook set may be extended to form an extended codebook set or a codebook set for CSI model training. If a current codebook W1 selects L = 4 beams at most, the expanded codebook set may be selected to L = 6, 8, 10, 12, 16. A mapping angle of an existing W2 is 2 or 3 bits and an amplitude thereof is 3 bits, which may be extended to an angle being 4 bits and an amplitude being 4 bits, etc. Larger numbers than those supported by the current standard may be further adopted for M.

The above codebook set for CSI model training may be configured to obtain a full set of codebook vectors that can be generated by one of the codebooks (Rel-15, 16, 17, 18, etc.) defined by the current standard, or a subset according to a certain rule. Or, an extended codebook set may further be obtained via configuration, and a subset is selected according to a rule. Or the above possible codebook sets are called using other codebook index sequences, a mode of calling a codebook sequence is known by both the CSI generation portion and the CSI reconstruction portion.

In some embodiments, when the network device finds that the terminal equipment has inconsistent models, the CSI generation portion performs online training and upgrading to match the CSI reconstructing portion, or the CSI reconstructing portion performs online training and upgrading to match the CSI generation portion.

The network side may communicate with the terminal side about configuration information of the CSI reconstruction portion. The network side may schedule the terminal side to transmit an index of a codebook vector determined to be used by the CSI generation portion, and a corresponding output of the CSI generation portion. The calling may be carried out in batches; for example, part of data is called first, and the other part of a dataset is scheduled if a training effect is not up to the standard. The training is completed through multiple times of calling.

The present disclosure is described below by using examples.

For example, based on a predefined codebook or DFT transformation matrix (such as an angular delay two-dimensional transformation matrix), all possible corresponding codebook vectors, or all possible vectors corresponding to the DFT transformation matrix may be generated.

$$W = W_1 \times \widetilde{W}_2 \times W_f^H$$

For example, for a vector generated based on the above Rel-16 or Rel-17 codebook matrix, its all possible codeword vectors are arranged in a predefined order. Vectors corresponding to the DFT transformation matrix may also generate corresponding vectors according to a predefined rule. For example,

$$W = W_1 W_2$$

$$W_1 = \begin{bmatrix} b_{i_1} & b_{i_2} & \cdots & b_{i_{N_s}} \end{bmatrix}, \quad W_2 = \begin{pmatrix} \alpha_{11} & \cdots & \alpha_{1L} \\ \vdots & \ddots & \vdots \\ \alpha_{N_s 1} & \cdots & \alpha_{N_s L} \end{pmatrix}$$

Specific used DFT is based on a predefined rule. More W cascading modes may be used to form a basis function of spatial, frequency and time domain feature mapping of a channel.

In this way, corresponding to a generation portion of a model ID and version information, and corresponding to a codebook or a DFT transformation matrix, corresponding vectors according to the arrangement are taken as inputs, and outputs are stored as a dataset according to the number of different output bits.

Table 6

| Configuration information 1 | Configuration information 2 | Serial number | The number 1 of output bits | The number 2 of output bits | The number 3 of output bits |
|---|---|---|---|---|---|
| Codebook matrix or DFT matrix flag | Matrix dimension configuration indication | Serial number of codebook vectors or DFT vectors | Output bit sequence 1 | Output bit sequence 2 | Output bit sequence 3 |

The above are a full set of CSI generation portion vectors and a possible outputted full set, for a model ID and version. Subsets may be obtained by indexing, and the subsets are used for training. Multiple subsets of the full set may be called multiple times for training.

Calling of a subset is indicated by an index or a bitmap of an index set. Lengths of the bitmap correspond to lengths of all serial numbers in the Table one by one from left to right. 0 in the bitmap represents that the vector is used, and 1 represents that the vector is not used. The index set here may correspond to different sub bands, representing indexes corresponding to different sub bands.

Table 7

|  | Sub band1 | Sub band2 | Sub band3 | Sub band4 |
|---|---|---|---|---|
| PMI-1 | 0 | 0 | 1 | 1 |
| PMI-2 | 1 | 1 | 0 | 0 |
| PMI-3 | 1 | 1 | 0 | 0 |
| PMI-4 | 1 | 1 | 1 | 0 |
| PMI-5 | 0 | 1 | 1 | 0 |

As shown in Table 7 above, for a current channel or a historically experienced channel, the terminal side or the network side may, after data screening and collection, extract PMI corresponding to a typical channel vector to form a dataset, and index codebook vector correspondence of a spatial domain and a frequency domain of the channel through an indication of the bitmap.

Or, it may be represented via a situation of DFT basis mapping corresponding to the DFT transformation matrix.

Table 8

|  | Delay 1 | Delay 2 | Delay 3 | Delay 4 |
|---|---|---|---|---|
| Angle-1 | 1 | 1 | 0 | 0 |
| Angle -2 | 1 | 1 | 1 | 0 |
| Angle -3 | 1 | 0 | 0 | 0 |

(continued)

|  | Delay 1 | Delay 2 | Delay 3 | Delay 4 |
|---|---|---|---|---|
| Angle -4 | 1 | 0 | 0 | 0 |

Angles and delays here correspond to different DFT basis vectors, respectively. It is worth noting that the above text is just schematic description. Similarly, a dataset corresponding to broadband CSI may further be formed according to configuration, or a dataset corresponding to channel features is formed in other ways. These datasets may be bound with model IDs, or further bound by means of a cell model ID, or bound by means of a UE model ID, according to configuration of a network, or identified according to other rules.

On the other hand, since the common paired dataset may reflect features of a channel spatial domain, frequency domain and time domain, its identification mode may reflect these features accordingly, which is convenient for a terminal or base station side to apply a dataset more suitable for a current channel condition to perform training when channel feature information can be obtained. For a channel vector dataset represented corresponding to the above mode(s), a corresponding generation portion compressed information dataset is further needed. that is, all channel vector datasets with a bitmap being 1. Thereby, a paired dataset is formed.

One example is that after obtaining configuration of a network side, a terminal side transmits the above bitmap set selected by its generation portion and a corresponding generation portion output set to the network side. When a dataset sample is larger, the air interface overhead is too large. If the terminal side and the network side may obtain the common paired dataset, interface interaction may be realized by transfering IDs of the dataset via an air interface, so that the air interface overhead is small.

In one example, a base station device determines a model for a certain model ID (including version information) by monitoring CSI feedback performance, or performance of a CSI model in use is not good, or the base station decides to start model training of the CSI reconstruction portion based on other conditions.

For a CSI model ID or a model ID currently in use, the base station configures the terminal equipment to transmit index identifier information (such as bitmap information) related to the CSI generation portion and channel state information (CSI), and indication information and configuration information of a codebook vector or DFT matrix vector for relevant training.

Based on the model ID of the CSI generation portion currently in use or the model ID configured by the base station, as well as the above vector indication and configuration information, the terminal equipment transmits the index identifier information (such as bitmap information) related to the CSI generation portion and the channel state information (CSI) corresponding to the model, or an index identifier information set to the base station.

The base station receives the index information or the index information set, and obtains an input information set required by the CSI reconstruction portion of the model ID according to the model ID in use or its configured model ID. For the model ID (including version information) and according to the index or index set, the base station obtains a corresponding CSI generation portion output vector set from its interior or a remote server, and generates a corresponding CSI generation portion input vector set according to the index or index set. The CSI generation portion output vector set is taken as input data of the CSI reconstruction portion, and the CSI generation portion input vector set is taken as label data of the CSI reconstruction portion to train the CSI reconstruction portion.

Similarly, the base station may, for a model ID and version, transmit codebook matrix or DFT matrix indication and configuration information, as well as corresponding index information or an index information set to the terminal equipment, the terminal equipment downloads the corresponding CSI generation portion (or CSI reconstruction portion) input vector set (output vector set, codebook or DFT transformation matrix corresponding vectors) and output vector set (input vector set) locally or from a remote server.

In another example, for the model ID and version, the CSI generation portion and the CSI reconstruction portion have multiple datasets for training for different channel environments. A dataset is given as a codebook vector set or as generating vectors of a DFT transformation matrix (such as a two-dimensional transformation matrix in an angle delay domain), such as $W = W_1 \times \widetilde{W}_2 \times W_f^H$, where vectors of each submatrix are given based on a codebook definition or other predefined rules. In this way, according to the model ID, version information, the codebook or DFT matrix configuration information, and a dataset serial number, the base station and the terminal equipment may obtain a training dataset required by the CSI reconstruction portion or the CSI generation portion.

The base station may configure the terminal equipment to transmit the above dataset serial number of the CSI generation portion, or the CSI generation portion dataset serial number for model ID version information, and obtain a training dataset required by the CSI reconstruction portion based on the information.

Similarly, the base station may transmit a training indication, the codebook or DFT matrix indication and configuration information, as well as the dataset serial number of the CSI reconstruction portion, or the CSI reconstruction portion dataset serial number for model ID version information to the terminal equipment. The terminal equipment obtains the dataset for training, and transmits training completion information to the base station after the training is completed. In addition, a training completion output dataset may be used to update a corresponding dataset of a server.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, the network device acquires a specific codebook vector inputted into the CSI generation portion, and the network device acquires CSI bit information outputted from the CSI generation portion and corresponding to the codebook vector. Thereby, suitable data may be obtained at a smaller cost to support a two-sided network model architecture.

Embodiments of a fourth aspect

The embodiments of the present disclosure take CSI generation and reporting as an example, and describe from a terminal equipment side. An AI/ML model includes a CSI generation portion located in a terminal equipment and a CSI reconstruction portion located in a network device, the contents same as those in the first to third aspects are not repeated here.

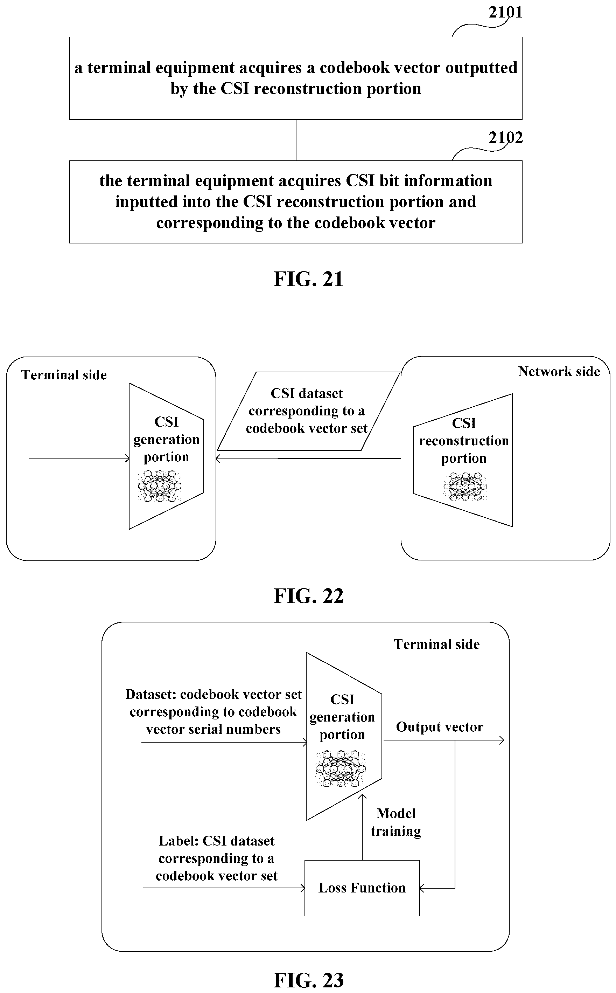

FIG. 21 is a schematic diagram of a method for acquiring data in the embodiments of the present disclosure, as shown in FIG. 21, the method includes:

2101, a terminal equipment acquires a codebook vector outputted by the CSI reconstruction portion; and
2102, the terminal equipment acquires CSI bit information inputted into the CSI reconstruction portion and corresponding to the codebook vector.

It should be noted that the above FIG. 21 is only schematic description of the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 21.

In some embodiments, the AI/ML model is a two-sided model and has a model identifier and a version identifier; the CSI generation portion and the CSI reconstruction portion of the same AI/ML model have the same model identifier and version identifier, and the CSI generation portion and the CSI reconstruction portion have different sub-identifiers.

In some embodiments, the CSI bit information (Y) is information inputted to the CSI reconstruction portion and corresponding to the codebook vector; the codebook vector (X) is part or all of data of a specific dataset, and is generated by the CSI bit information (Y) after being inputted to the CSI reconstruction portion.

In some embodiments, the CSI bit information is carried by a control channel or a data channel and transmitted via an air interface, and/or, the codebook vector is generated via a data index according to a predefined rule.

In some embodiments, the terminal equipment obtains the CSI bit information and/or the codebook vector from a memory or interior of the terminal equipment or from exterior of the terminal equipment according to identification information related to the CSI reconstruction portion.

In some embodiments, the identification information related to the CSI reconstruction portion includes: a model identifier and/or version information to which the CSI reconstruction portion corresponds, and/or data configuration information of a model to which the CSI reconstruction portion corresponds, and/or a data index of the CSI reconstruction portion, and/or an indication sequence of a codebook vector or DFT vector of the CSI reconstruction portion.

In some embodiments, the terminal equipment receives a model training indication and configuration information for a model identifier, transmitted by the network device; the configuration information including an indication sequence of a codebook vector or a DFT matrix vector for training, and a CSI reconstruction portion input bit sequence corresponding to the vector.

In some embodiments, the terminal equipment generates a corresponding codebook vector or DFT matrix vector based on the indication sequence and according to a predefined rule.

In some embodiments, the terminal equipment receives resource configuration of the network device; and the terminal equipment receives the indication sequence and the CSI reconstruction portion input bit sequence according to the resource configuration.

FIG. 22 is an example diagram of acquiring data by a CSI generation portion in the embodiments of the present disclosure. As shown in FIG. 22, the network side may transmit a CSI dataset corresponding to a codebook vector to the terminal equipment. As for data or other modes of acquisition, refer to the previous embodiments.

In some embodiments, the terminal equipment inputs the codebook vector into the CSI generation portion and trains the CSI generation portion by taking the CSI bit information as label data.

FIG. 23 is a further example diagram of training by a CSI generation portion in the embodiments of the present disclosure. As shown in FIG. 23, a codebook vector set corresponding to codebook vector serial numbers may be used as input, and a CSI dataset corresponding to the codebook vector set may be used as label data to train the CSI generation portion.

In some embodiments, the terminal equipment receives an AI/ML-related capability query transmitted by the network device; and the terminal equipment feeds back an AI/ML-related capability response to the network device. The AI/ML-related capability includes at least one of the following: signal processing module information, AI/ML support information, AI/ML model identification information, version information, data configuration information, AI/ML training capability information, or AI/ML upgrade capability information.

In some embodiments, when the network device determines that the terminal equipment has an AI/ML capability but the model identifier and/or version information of the CSI generation portion is/are different from the model identifier and/or version information of the CSI reconstruction portion, the network device indicates or configures the terminal equipment to receive CSI bit information and/or a codebook vector corresponding to the model identifier and/or version information of the CSI reconstruction portion.

In some embodiments, after the CSI generation portion completes training by using the codebook vector and the CSI bit information, the terminal equipment sets the model identifier and/or version information of the CSI generation portion to be identical to the model identifier and/or version information of the CSI reconstruction portion.

In some embodiments, the terminal equipment transmits acknowledgement information to the network device acknowledging that its CSI generation portion is available, and/or indication information indicating that the CSI generation portion update is completed.

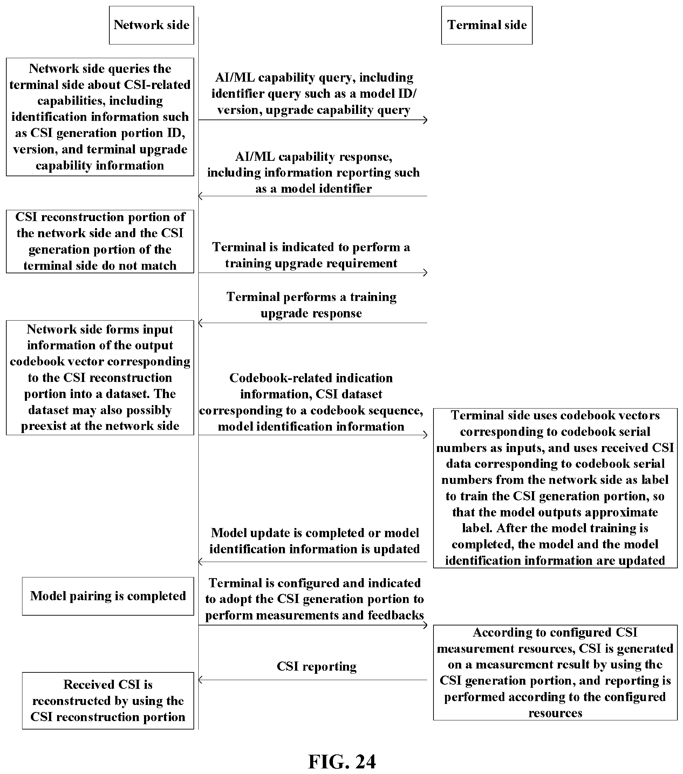

FIG. 24 is a signaling schematic diagram of training by a CSI generation portion in the embodiments of the present disclosure.

As shown in FIG. 24, the network side lets the terminal side report an AI/ML capability of CSI feedback, which may include an inquiry of model information such as AI/ML model ID and version, etc. The terminal side reports relevant capability information, including an indication of an AI/ML model ID, version and other model information used by its CSI generation portion. If the network side has a CSI reconstruction portion model with a corresponding ID and version, it enters a joint work phase.

Otherwise, if the network side knows that the ID and version of the AI/ML model used by the CSI generation portion of the terminal side do not match one or more CSI reconstruction portions at the network side, it indicates that AI/ML models at both sides of communication cannot work jointly.

The network side may indicate the terminal side to perform training upgrade, and train the CSI generation portion. The terminal side may transmit a training upgrade response. The network side may form input information of the CSI reconstruction portion corresponding to an output codebook vector into a dataset. The dataset may also possibly preexist at the network side.

As shown in FIG. 24, the network side may transmit codebook-related indication information, a CSI dataset corresponding to a codebook sequence, model identification information, etc., to the terminal side.

As shown in FIG. 24, the terminal side uses codebook vectors corresponding to codebook serial numbers as inputs, and uses CSI data corresponding to the codebook serial numbers received from the network side as label data to train the CSI generation portion, so that the model outputs approximate the label data. After training of the model is completed, the model and the model identification information are updated. Then, completion of model update may be indicated, and model pairing is completed.

As shown in FIG. 24, the network side may configure and indicate the terminal side to use the CSI generation portion to perform CSI measurement and feedback; according to a configured CSI measurement resource, the terminal side generates CSI for a measurement result by using the updated CSI generation portion, and reports the CSI according to the configured resource. The network side may reconstruct received CSI by using the CSI reconstruction portion.

It should be noted that the above FIG. 24 is only schematic description of the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 24.

In some embodiments, a format and/or size of the CSI is/are predefined, or the format and/or size of the CSI is/are configured by the network device.

In some embodiments, the terminal equipment extends the codebook vector and takes the expanded codebook vector as the label data.

In some embodiments, in the expanded codebook vector, the number of selectable beams of W1 is up to 6, 8, 10, 12, 16; W2 has a mapping angle of up to 5 bits and an amplitude of up to 5 bits.

The present disclosure is described below by using examples.

In one example, the terminal equipment receives model training indication information transmitted by the network device, and/or CSI reconstruction portion model dataset indication information. The terminal equipment acquires a corresponding dataset (locally or from a remote server) as an output dataset for training of the CSI generation portion, and acquires or generates a CSI generation portion input dataset according to dataset serial numbers.

The training indication information may include model ID information, version information, codebook matrix or DFT transformation matrix indication and configuration information, dataset indication information, indicating a data subset corresponding to the model ID and version. The terminal equipment may train the CSI generation portion according to these data.

If poor performance is found during training, the terminal equipment transmits training dataset continue requesting information to the network device. The network device continues to transmit the above CSI reconstruction portion model dataset indication information to indicate other datasets. The terminal equipment acquires a corresponding dataset (locally or from a remote server) as an output dataset for training of the CSI generation portion, and acquires or generates a CSI generation portion input dataset according to dataset serial numbers. The above process may continue until the model training test performance meets a requirement, the terminal equipment transmits training completion indication information to the network device.

In another example, the network device may, for a model ID and version, transmit codebook matrix or DFT matrix indication and configuration information, as well as corresponding index information or an index information set to the terminal equipment, the terminal equipment downloads the corresponding CSI generation portion (CSI reconstruction portion) input vector set (output vector set, codebook or DFT transformation matrix corresponding vectors) and output vector set (input vector set) locally or from a remote server. The terminal equipment may train the CSI generation portion according to these data.

If the training performance cannot meet the requirement, the terminal equipment transmits training dataset continue requesting information to the network device, and the network device transmits other codebook matrix or DFT matrix indication and configuration information, and corresponding index information or index information set. The terminal equipment continues training after acquiring a corresponding dataset, until test performance of the model training meets the requirement, the terminal equipment transmits the training completion indication information to the network device.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, the terminal equipment acquires a codebook vector outputted by the CSI reconstruction portion, and the terminal equipment acquires CSI bit information inputted into the CSI reconstruction portion and corresponding to the codebook vector. Thereby, suitable data may be obtained at a smaller cost to support a two-sided network model architecture.

Embodiments of a fifth aspect

Embodiments of the present disclosure provide an apparatus for acquiring data. The apparatus may be the aforementioned second device (terminal equipment or network device), or may be one or more parts or components configured in the second device. The contents same as the embodiments of the first to fourth aspect are not repeated.

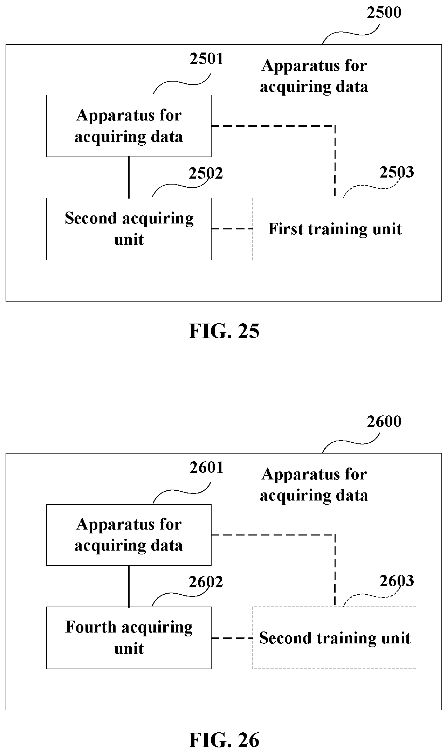

FIG. 25 is a schematic diagram of an apparatus for acquiring data in the embodiments of the present disclosure. An AI/ML model includes an information generation portion located in a first device and an information reconstruction portion located in the second device. As shown in FIG. 25, the apparatus 2500 for acquiring data includes:

a first acquiring unit 2501 configured to acquire first data X inputted into the information generation portion; and
a second acquiring unit 2502 configured to acquire second data Y corresponding to the first data X and outputted from the information generation portion.

As shown in FIG. 25, the apparatus 2500 for acquiring data may further include:
a first training unit 2503 configured to input the second data Y into the information reconstruction portion and train the information reconstruction portion by taking the first data X as label data.

In some embodiments, the first data X are a part or all of data of a specific dataset inputted into the information generation portion, and the second data Y are corresponding data generated after the first data X are inputted into the information generation unit.

In some embodiments, the information generation portion in the first device and the information reconstruction portion in the second device perform training by using the first data X and the second data Y respectively; and when the first data X are inputted, the trained information generation portion in the first device outputs data that are the second data Y or data that are similar to the second data Y, and when the second data Y are inputted, the trained information reconstruction portion in the second device outputs data that are the first data X or data similar to the first data X.

In some embodiments, the first data X and the second data Y are paired datasets, the paired datasets having model identification information.

In some embodiments, one first data X corresponds to multiple second data Y.

In some embodiments, the first acquiring unit 2501 or the second acquiring unit 2502 obtains the first data X and/or the second data Y from interior of the second device or from exterior of the second device according to identification information related to the information generation portion.

In some embodiments, the identification information related to the information generation portion includes: a model identifier and/or version information to which the information generation portion corresponds, and/or data configuration information of a model to which the information generation portion corresponds.

In some embodiments, the second data Y are carried by a control channel or a data channel and transmitted via an air interface, or the second data Y are generated via a data index according to a predefined rule, or an index of the second data Y is transmitted by the first device to the second device via an air interface.

In some embodiments, the first data X are pre-stored in the second device, or the first data X are generated via a data index according to a predefined rule, or the first data X are transmitted by the first device to the second device via an air interface, or an index of the first data X is transmitted by the first device to the second device via an air interface.

In some embodiments, the AI/ML model has a model identifier and a version identifier, the information generation portion and the information reconstruction portion of the same AI/ML model use the same model identifier and version identifier, and the information generation portion and the information reconstruction portion have different sub-identifiers.

In some embodiments, the apparatus further includes:

a transmitting unit configured to transmit an AI/ML-related capability query to the first device; and
a receiving unit configured to receive an AI/ML-related capability response fed back by the first device.

In some embodiments, the AI/ML-related capability includes at least one of the following: signal processing module information, AI/ML support information, AI/ML model identification information, version information, data configuration information, AI/ML support training capability information, or AI/ML upgrade capability information.

In some embodiments, when the second device determines that the first device has an AI/ML capability but the model identifier and/or version information of the information generation portion is/are different from the model identifier and/or version information of the information reconstruction portion, the first acquiring unit or the second acquiring unit acquires the first data and/or the second data corresponding to the model identifier and/or version information of the information generation portion of the first device.

In some embodiments, after the information reconstruction portion completes training by using the first data and the second data, the model identifier and/or version information of the information reconstruction portion is/are set to be identical to the model identifier and/or version information of the information generation portion.

In some embodiments, the transmitting unit further transmits acknowledgement information to the first device acknowledging that the information generation portion of the first device is available, and/or transmits indication information enabling the information generation portion and/or the information reconstruction portion.

The following text takes CSI as an example for description. The second device is a network device, and an AI/ML model includes a CSI generation portion located in a terminal equipment and a CSI reconstruction portion located in a network device.

In some embodiments, the first acquiring unit 2501 acquires a specific codebook vector inputted into the CSI generation portion, and the second acquiring unit 2502 acquires CSI bit information outputted from the CSI generation portion and corresponding to the codebook vector.

In some embodiments, the first training unit 2503 inputs the CSI bit information into the CSI reconstruction portion and trains the CSI reconstruction portion by taking the codebook vector as label data.

In some embodiments, the codebook vector (X) is data inputted to the CSI generation portion; the CSI bit information (Y) is a bit sequence generated after the codebook vector (X) is inputted to the CSI generation portion.

In some embodiments, the CSI bit information is carried by a control channel or a data channel and transmitted via an air interface, and/or, the codebook vector is generated via a data index according to a predefined rule.

In some embodiments, the network device obtains the CSI bit information and/or the codebook vector from interior of the network device or from exterior of the network device according to identification information related to the CSI generation portion.

In some embodiments, the identification information related to the CSI generation portion includes: a model identifier and/or version information to which the CSI generation portion corresponds, and/or data configuration information of a model to which the CSI generation portion corresponds, and/or a data index of the CSI generation portion, and/or an indication sequence of a codebook vector or DFT vector of the CSI generating portion.

In some embodiments, the network device transmits a model training indication and configuration information for a model identifier to the terminal equipment; the configuration information including an indication sequence of a codebook vector or a DFT matrix vector for training;
the network device receives an indication sequence for indicating a codebook vector or a DFT vector transmitted by the terminal equipment, and a CSI generation part output bit sequence corresponding to the vector.

In some embodiments, the network device generates a corresponding codebook vector or DFT matrix vector based on the indication sequence and according to a predefined rule.

In some embodiments, the network device receives a resource request from the terminal equipment; and the network device configures uplink resources for the terminal equipment, such that the terminal equipment transmits the indication sequence and the CSI generation part output bit sequence.

In some embodiments, the AI/ML model is a two-sided model and has a model identifier and a version identifier; the CSI generation portion and the CSI reconstruction portion of one two-sided model have the same model identifier and version identifier, and the CSI generation portion and the CSI reconstruction portion have different sub-identifiers.

In some embodiments, the network device transmits an AI/ML-related capability query to the terminal equipment; and the network device receives an AI/ML-related capability response fed back by the terminal equipment.

In some embodiments, the AI/ML-related capability includes at least one of the following: signal processing module information, AI/ML support information, AI/ML model identification information, version information, data configuration information, AI/ML training capability information, or AI/ML upgrade capability information.

In some embodiments, when the network device determines that the terminal equipment has an AI/ML capability but the model identifier and/or version information of the CSI generation portion is/are different from the model identifier and/or version information of the CSI reconstruction portion, the network device indicates or configures the terminal equipment to transmit a CSI bit sequence and/or a corresponding codebook vector for training, corresponding to the model identifier and/or version information of the CSI generation portion.

In some embodiments, a format and/or size of the CSI is/are predefined, or the format and/or size of the CSI is/are configured by the network device.

In some embodiments, after the CSI reconstruction portion completes training by using the CSI bit information and the codebook vector, the network device sets the model identifier and/or version information of the CSI reconstruction portion to be identical to the model identifier and/or version information of the CSI generation portion.

In some embodiments, the network device transmits indication information enabling the CSI generation portion and/or the CSI reconstruction portion to the terminal equipment, and/or transmits acknowledgement information acknowledging that the CSI generation portion may be used.

In some embodiments, the network device extends the codebook vector and takes the expanded codebook vector as the label data.

In some embodiments, in the expanded codebook vector, the number of selectable beams of W1 is up to 6, 8, 10, 12, 16; W2 has a mapping angle of up to 5 bits and an amplitude of up to 5 bits.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The apparatus 2500 for acquiring data may further include other components or modules. For detailed contents of these components or modules, relevant technologies can be referred to.

Moreover, for the sake of simplicity, FIG. 25 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

As may be known from the above embodiments, the second device acquires first data X that are inputted to the information generation portion; and the second device acquires second data Y corresponding to the first data X and outputted from the information generation portion. Thereby, suitable data may be obtained at a smaller cost to support a two-sided network model architecture.

Embodiments of a sixth aspect

Embodiments of the present disclosure provide an apparatus for acquiring data. The apparatus may be the aforementioned first device (terminal equipment or network device), or may be one or more parts or components configured in the first device. The contents same as the embodiments of the first to fourth aspect are not repeated.

FIG. 26 is a schematic diagram of an apparatus for acquiring data in the embodiments of the present disclosure. An AI/ML model includes an information generation portion located in a first device and an information reconstruction portion located in the second device. As shown in FIG. 26, the apparatus 2600 for acquiring data includes:

a third acquiring unit 2601 configured to acquire first data X outputted by the information reconstruction portion; and

a fourth acquiring unit 2602 configured to acquire second data Y inputted into the information reconstruction portion and corresponding to the first data X.

As shown in FIG. 26, the apparatus 2600 for acquiring data may further include:

a second training unit 2603 configured to input the first data X into the information generation portion and train the information generation portion by taking the second data Y as label data.

In some embodiments, the second data Y are data inputted into the information reconstruction portion and corresponding to the first data X, and the first data X are a part or all of a specific dataset and are generated after the second data Y are inputted into the information reconstruction portion.

In some embodiments, the information generation portion in the first device and the information reconstruction portion in the second device perform training by using the first data X and the second data Y respectively; and when the first data X are inputted, the trained information generation portion in the first device outputs data that are the second data Y or data that are similar to the second data Y, and when the second data Y are inputted, the trained information reconstruction portion in the second device outputs data that are the first data X or data similar to the first data X.

In some embodiments, the first data X and the second data Y are paired datasets, the paired datasets having model identification information.

In some embodiments, the one first data X corresponds to the multiple second data Y.

In some embodiments, the first device obtains the second data and/or the first data from interior of the first device or from exterior of the first device according to identification information related to the information reconstruction portion.

In some embodiments, the identification information related to the information reconstruction portion includes: a model identifier and/or version information to which the information reconstruction portion corresponds, and/or data configuration information of a model to which the information reconstruction portion corresponds.

In some embodiments, the second data Y are carried by a control channel or a data channel and transmitted via an air interface, or the second data Y are generated via a data index according to a predefined rule, or an index of the second data Y is transmitted by the second device to the first device via an air interface.

In some embodiments, the first data X are pre-stored in the first device, or the first data X are generated via a data index according to a predefined rule, or the first data X are transmitted by the second device to the first device via an air interface, or an index of the first data X is transmitted by the second device to the first device via an air interface.

In some embodiments, the AI/ML model has a model identifier and a version identifier, the information generation portion and the information reconstruction portion of the same AI/ML model use the same model identifier and version identifier, and the information generation portion and the information reconstruction portion have different sub-identifiers.

In some embodiments, the apparatus further includes:

a transmitting unit configured to transmit an AI/ML-related capability query to the second device; and

a receiving unit configured to receive an AI/ML-related capability response fed back by the second device.

In some embodiments, the AI/ML-related capability includes at least one of the following: signal processing module information, AI/ML support information, AI/ML model identification information, version information, data configuration information, AI/ML support training capability information, or AI/ML upgrade capability information.

In some embodiments, when the first device determines that the second device has an AI/ML capability but the model identifier and/or version information of the information generation portion is/are different from the model identifier and/or version information of the information reconstruction portion, the first device acquires the first data and/or the second data corresponding to the model identifier and/or version information of the information reconstruction portion of the second device.

In some embodiments, after the information generation portion completes training by using the first data and the second data, the first device sets the model identifier and/or version information of the information generation portion to be identical to the model identifier and/or version information of the information reconstruction portion.

In some embodiments, the transmitting unit transmits acknowledgement information to the second device acknowledging that the information reconstruction portion of the second device is available, and/or indication information enabling the information generation portion and/or the information reconstruction portion.

The following text takes CSI as an example for description, the first device is a terminal equipment. An AI/ML model includes a CSI generation portion located in a terminal equipment and a CSI reconstruction portion located in a network device.

The third acquiring unit 2601 acquires a codebook vector outputted by the CSI reconstruction portion, and the fourth acquiring unit 2602 acquires CSI bit information inputted into the CSI reconstruction portion and corresponding to the codebook vector.

In some embodiments, the second training unit 2603 inputs the codebook vector into the CSI generation portion and trains the CSI generation portion by taking the CSI bit information as label data.

In some embodiments, the CSI bit information (Y) is information inputted to the CSI reconstruction portion and corresponding to the codebook vector; the codebook vector (X) is part or all of data of a specific dataset, and is generated by the CSI bit information (Y) after being inputted to the CSI reconstruction portion.

In some embodiments, the CSI bit information is carried by a control channel or a data channel and transmitted via an air interface, and/or, the codebook vector is generated via a data index according to a predefined rule.

In some embodiments, the terminal equipment obtains the CSI bit information and/or the codebook vector from a memory or interior of the terminal equipment or from exterior of the terminal equipment according to identification information related to the CSI reconstruction portion.

In some embodiments, the identification information related to the CSI reconstruction portion includes: a model identifier and/or version information to which the CSI reconstruction portion corresponds, and/or data configuration information of a model to which the CSI reconstruction portion corresponds, and/or a data index of the CSI reconstruction portion, and/or an indication sequence of a codebook vector or DFT vector of the CSI reconstruction portion.

In some embodiments, the terminal equipment receives a model training indication and configuration information for a model identifier, transmitted by the network device; the configuration information including an indication sequence of a codebook vector or a DFT matrix vector for training, and a CSI reconstruction portion input bit sequence corresponding to the vector.

In some embodiments, the terminal equipment generates a corresponding codebook vector or DFT matrix vector based on the indication sequence and according to a predefined rule.

In some embodiments, the terminal equipment receives resource configuration of the network device; and the terminal equipment receives the indication sequence and the CSI reconstruction portion input bit sequence according to the resource configuration.

In some embodiments, the AI/ML model is a two-sided model and has a model identifier and a version identifier; the CSI generation portion and the CSI reconstruction portion of the same AI/ML model have the same model identifier and version identifier, and the CSI generation portion and the CSI reconstruction portion have different sub-identifiers.

In some embodiments, the terminal equipment receives an AI/ML-related capability query transmitted by the network device; and the terminal equipment feeds back an AI/ML-related capability response to the network device.

In some embodiments, the AI/ML-related capability includes at least one of the following: signal processing module information, AI/ML support information, AI/ML model identification information, version information, data configuration information, AI/ML training capability information, or AI/ML upgrade capability information.

In some embodiments, when the network device determines that the terminal equipment has an AI/ML capability but the model identifier and/or version information of the CSI generation portion is/are different from the model identifier and/or version information of the CSI reconstruction portion, the network device indicates or configures the terminal equipment to receive CSI bit information and/or a codebook vector corresponding to the model identifier and/or version information of the CSI reconstruction portion.

In some embodiments, a format and/or size of the CSI is/are predefined, or the format and/or size of the CSI is/are configured by the network device.

In some embodiments, after the CSI generation portion completes training by using the codebook vector and the CSI bit information, the terminal equipment sets the model identifier and/or version information of the CSI generation portion to be identical to the model identifier and/or version information of the CSI reconstruction portion.

In some embodiments, the terminal equipment transmits acknowledgement information to the network device acknowledging that its CSI generation portion is available, and/or indication information indicating that the CSI generation portion update is completed.

In some embodiments, the terminal equipment extends the codebook vector and takes the expanded codebook vector as the label data.

In some embodiments, in the expanded codebook vector, the number of selectable beams of W1 is up to 6, 8, 10, 12, 16; W2 has a mapping angle of up to 5 bits and an amplitude of up to 5 bits.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The apparatus 2600 for acquiring data may further include other components or modules. For detailed contents of these components or modules, relevant technologies can be referred to.

Moreover, for the sake of simplicity, FIG. 26 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

As may be known from the above embodiments, the first device acquires first data X outputted by the information reconstruction portion; and the first device acquires second data Y inputted into the information reconstruction portion and corresponding to the first data X. Thereby, suitable data may be obtained at a smaller cost to support a two-sided network model architecture.

Embodiments of a seventh aspect

The embodiments of the present disclosure further provide a communication system, FIG. 1 may be referred to, the contents same as the embodiments of the first to sixth aspects are not repeated.

In some embodiments, an AI/ML model includes an information generation portion located in a first device and an information reconstruction portion located in a second device, the communication system 100 at least may include:

a first device configured to acquire first data X outputted by the information reconstruction portion; and acquire second data Y inputted into the information reconstruction portion and corresponding to the first data X; and
a second device configured to acquire first data X that are inputted to the information generation portion; and acquire second data Y corresponding to the first data X and outputted from the information generation portion.

In some embodiments, an AI/ML model includes a CSI generation portion located in a terminal equipment and a CSI reconstruction portion located in a network device; the communication system 100 at least may include:

the network device configured to acquire a specific codebook vector inputted into the CSI generation portion, and acquire CSI bit information outputted from the CSI generation portion and corresponding to the codebook vector; and
the terminal equipment configured to acquire a codebook vector outputted by the CSI reconstruction portion, and acquire CSI bit information inputted into the CSI reconstruction portion and corresponding to the codebook vector.

The embodiments of the present disclosure further provide a network device, for example may be a base station, but the present disclosure is not limited to this, it may also be other network device.

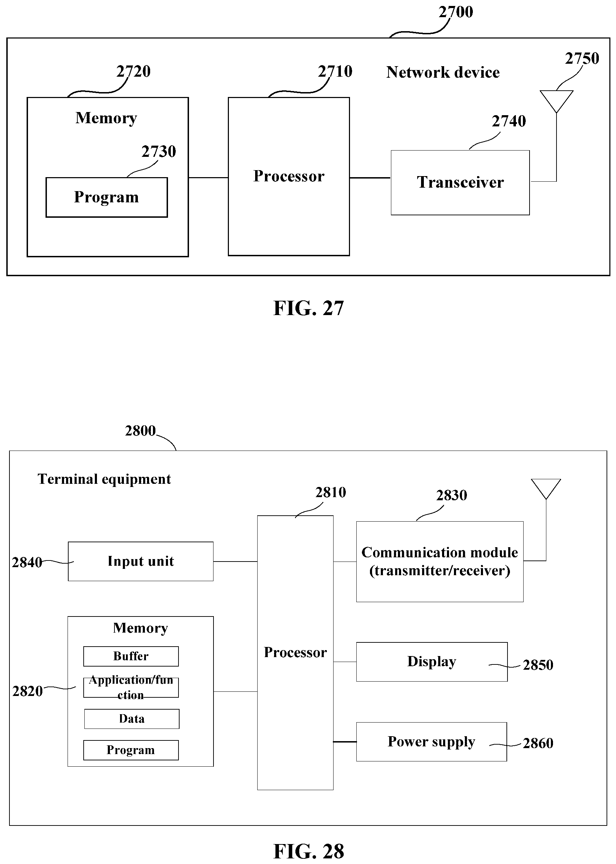

FIG. 27 is a composition schematic diagram of a network device in the embodiments of the present disclosure. As shown in FIG. 27, the network device 2700 may include: a processor 2710 (such as a central processing unit (CPU)) and a memory 2720; the memory 2720 is coupled to the processor 2710. The memory 2720 may store various data; moreover, also stores a program 2730 for information processing, and executes the program 2730 under the control of the processor 2710.

For example, the processor 2710 may be configured to execute a program to implement the method for acquiring data as described in the embodiments of the first aspect. For example, the processor 2710 may be configured to perform the following control: acquire first data X that are inputted to the information generation portion; and acquire second data Y corresponding to the first data X and outputted from the information generation portion.

For another example, the processor 2710 may be configured to execute a program to implement the method for acquiring data as described in the embodiments of the second aspect. For example, the processor 2710 may be configured to perform the following control: acquire first data X outputted by the information reconstruction portion; and acquire second data Y inputted into the information reconstruction portion and corresponding to the first data X.

For another example, the processor 2710 may be configured to execute a program to implement the method for acquiring data as described in the embodiments of the third aspect. For example, the processor 2710 may be configured to perform the following control: acquire a specific codebook vector inputted into the CSI generation portion, and acquire CSI bit information outputted from the CSI generation portion and corresponding to the codebook vector.

In addition, as shown in FIG. 27, the network device 2700 may further include: a transceiver 2740 and an antenna 2750, etc.; wherein the functions of said components are similar to relevant arts, which are not repeated here. It's worth noting that the network device 2700 does not have to include all the components shown in FIG. 27. Moreover, the network device 2700 may further include components not shown in FIG. 27, relevant arts may be referred to.

The embodiments of the present disclosure further provide a terminal equipment, but the present disclosure is not limited to this, it may also be other device.

FIG. 28 is a schematic diagram of a terminal equipment in the embodiments of the present disclosure. As shown in FIG. 28, the terminal equipment 2800 may include a processor 2810 and a memory 2820; the memory 2820 stores data and programs, and is coupled to the processor 2810. It's worth noting that this figure is exemplary; other types of structures can also be used to supplement or replace this structure, so as to realize a telecommunication function or other functions.

For example, the processor 2810 may be configured to execute a program to implement the method for acquiring data as described in the embodiments of the first aspect. For example, the processor 2810 may be configured to perform the following control: acquire first data X that are inputted to the information generation portion; and acquire second data Y corresponding to the first data X and outputted from the information generation portion.

For another example, the processor 2810 may be configured to execute a program to implement the method for acquiring data as described in the embodiments of the second aspect. For example, the processor 2810 may be configured to perform the following control: acquire first data X outputted by the information reconstruction portion; and acquire second data Y inputted into the information reconstruction portion and corresponding to the first data X.

For another example, the processor 2810 may be configured to execute a program to implement the method for acquiring data as described in the embodiments of the fourth aspect. For example, the processor 2810 may be configured to perform the following control: acquire a codebook vector outputted by the CSI reconstruction portion, and acquire CSI bit information inputted into the CSI reconstruction portion and corresponding to the codebook vector.

As shown in FIG. 28, the terminal equipment 2800 may further include: a communication module 2830, an input unit 2840, a display 2850 and a power source 2860. The functions of said components are similar to relevant arts, which are not repeated here. It's worth noting that the terminal equipment 2800 does not have to include all the components shown in FIG. 28, said components are not indispensable. Moreover, the terminal equipment 2800 may further include components not shown in FIG. 28, relevant arts can be referred to.

The embodiments of the present disclosure further provide a computer program, wherein when a terminal equipment executes the program, the program enables the terminal equipment to execute the method for acquiring data described in the embodiments of the first, second and fourth aspects.

The embodiments of the present disclosure further provide a storage medium in which a computer program is stored, wherein the computer program enables a terminal equipment to execute the method for acquiring data described in the embodiments of the first, second and fourth aspects.

The embodiments of the present disclosure further provide a computer program, wherein when a network device executes the program, the program enables the network device to execute the method for acquiring data described in the embodiments of the first, second and third aspects.

The embodiments of the present disclosure further provide a storage medium in which a computer program is stored, wherein the computer program enables a network device to execute the method for acquiring data described in the embodiments of the first, second and third aspects.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:

1. A method for acquiring data, wherein an AI/ML model includes an information generation portion located in a first device and an information reconstruction portion located in a second device, and the method includes:

the second device acquires first data X inputted into the information generation portion; and
the second device acquires second data Y corresponding to the first data X and outputted from the information generation portion.

2. The method according to Supplement 1, wherein the method further includes:
the second device inputs the second data Y into the information reconstruction portion and trains the information reconstruction portion by taking the first data X as label data.

3. The method according to Supplement 1 or 2, wherein the first data X are a part or all of data of a specific dataset inputted into the information generation portion, and the second data Y are corresponding data generated after the first data X are inputted into the information generation unit.

4. The method according to any one of Supplements 1 to 3, wherein the information generation portion in the first device and the information reconstruction portion in the second device perform training by using the first data X and the second data Y respectively; and

when the first data X are inputted, the trained information generation portion in the first device outputs data that are the second data Y or data that are similar to the second data Y; and
when the second data Y are inputted, the trained information reconstruction portion in the second device outputs data that are the first data X or data similar to the first data X.

5. The method according to any one of Supplements 1 to 4, wherein the first data X and the second data Y are paired datasets, the paired datasets having model identification information.

6. The method according to Supplement 5, wherein one first data X corresponds to multiple second data Y.

7. The method according to Supplement 6, wherein a format of the second data is predefined or configured.

8. The method according to any one of Supplements 4 to 7, wherein the trained paired datasets are registered with model IDs and/or version IDs.

9. The method according to Supplement 8, wherein the model IDs and/or version IDs are uploaded into a core network, an external server, or a network device.

10. The method according to any one of Supplements 1 to 9, wherein
the second device obtains the first data X and/or the second data Y from interior of the second device or from exterior of the second device according to identification information related to the information generation portion.

11. The method according to Supplement 10, wherein the identification information related to the information generation portion includes: a model identifier and/or version information to which the information generation portion corresponds, and/or data configuration information of a model to which the information generation portion corresponds.

12. The method according to any one of Supplements 1 to 11, wherein the second data Y are carried by a control channel or a data channel and transmitted via an air interface, or the second data Y are generated via a data index according to a predefined rule, or an index of the second data Y is transmitted by the first device to the second device via an air interface.

13. The method according to any one of Supplements 1 to 12, the first data X are pre-stored in the second device, or the first data X are generated via a data index according to a predefined rule, or the first data X are transmitted by the first device to the second device via an air interface, or an index of the first data X is transmitted by the first device to the second device via an air interface.

14. The method according to any one of Supplements 1 to 13, wherein the AI/ML model has a model identifier and a version identifier, the information generation portion and the information reconstruction portion of the same AI/ML model use the same model identifier and version identifier, and the information generation portion and the information reconstruction portion have different sub-identifiers.

15. The method according to any one of Supplements 1 to 14, wherein the method further includes:

the second device transmits an AI/ML-related capability query to the first device; and
the second device receives an AI/ML-related capability response fed back by the first device.

16. The method according to Supplement 15, wherein the AI/ML-related capability includes at least one of the following: signal processing module information, AI/ML support information, AI/ML model identification information, version information, data configuration information, AI/ML support training capability information, or AI/ML upgrade capability information.

17. The method according to Supplement 15, wherein the method further includes:
when the second device determines that the first device has an AI/ML capability but the model identifier and/or version information of the information generation portion is/are different from the model identifier and/or version information of the information reconstruction portion, the second device acquires the first data and/or the second data corresponding to the model identifier and/or version information of the information generation portion of the first device.

18. The method according to Supplement 17, wherein the method further includes:
after the information reconstruction portion completes training by using the first data and the second data, the second device sets the model identifier and/or version information of the information reconstruction portion to be identical to the model identifier and/or version information of the information generation portion.

19. The method according to Supplement 18, wherein the method further includes:
the second device transmits acknowledgement information to the first device acknowledging that the information generation portion of the first device is available, and/or transmits indication information enabling the information generation portion and/or the information reconstruction portion.

20. A method for acquiring data, wherein an AI/ML model includes an information generation portion located in a first device and an information reconstruction portion located in a second device, and the method includes:

the first device acquires first data X outputted by the information reconstruction portion; and
the first device acquires second data Y inputted into the information reconstruction portion and corresponding to the first data X.

21. The method according to Supplement 20, wherein the method further includes:
the first device inputs the first data X into the information generation portion and trains the information generation portion by taking the second data Y as label data.

22. The method according to Supplement 20 or 21, wherein the second data Y are data inputted into the information reconstruction portion and corresponding to the first data X, and the first data X are a part or all of a specific dataset and are generated after the second data Y are inputted into the information reconstruction portion.

23. The method according to any one of Supplements 20 to 22, wherein the information generation portion in the first device and the information reconstruction portion in the second device perform training by using the first data X and the second data Y respectively; and

when the first data X are inputted, the trained information generation portion in the first device outputs data that are the second data Y or data that are similar to the second data Y; and
when the second data Y are inputted, the trained information reconstruction portion in the second device outputs data that are the first data X or data similar to the first data X.

24. The method according to any one of Supplements 20 to 23, wherein the first data X and the second data Y are paired datasets, the paired datasets having model identification information.

25. The method according to Supplement 24, wherein one first data X corresponds to multiple second data Y.

26. The method according to Supplement 25, wherein a format of the second data is predefined or configured.

27. The method according to any one of Supplements 23 to 25, wherein the trained paired datasets are registered with model IDs and/or version IDs.

28. The method according to Supplement 27, wherein the model IDs and/or version IDs are uploaded into a core network, an external server, or a network device.

29. The method according to any one of Supplements 20 to 28, wherein
the first device obtains the second data and/or the first data from interior of the first device or from exterior of the first device according to identification information related to the information reconstruction portion.

30. The method according to Supplement 29, wherein the identification information related to the information reconstruction portion includes: a model identifier and/or version information to which the information reconstruction portion corresponds, and/or data configuration information of a model to which the information reconstruction portion corresponds.

31. The method according to any one of Supplements 20 to 30, wherein the second data Y are carried by a control channel or a data channel and transmitted via an air interface, or the second data Y are generated via a data index according to a predefined rule, or an index of the second data Y is transmitted by the second device to the first device via an air interface.

32. The method according to any one of Supplements 20 to 31, wherein the first data X are pre-stored in the first device, or the first data X are generated via a data index according to a predefined rule, or the first data X are transmitted by the second device to the first device via an air interface, or an index of the first data X is transmitted by the second device to the first device via an air interface.

33. The method according to any one of Supplements 20 to 32, wherein the AI/ML model has a model identifier and a version identifier, the information generation portion and the information reconstruction portion of the same AI/ML model use the same model identifier and version identifier, and the information generation portion and the information reconstruction portion have different sub-identifiers.

34. The method according to any one of Supplements 20 to 33, wherein the method further includes:

the first device transmits an AI/ML-related capability query to the second device; and
the first device receives an AI/ML-related capability response fed back by the second device.

35. The method according to Supplement 34, wherein the AI/ML-related capability includes at least one of the following: signal processing module information, AI/ML support information, AI/ML model identification information, version information, data configuration information, AI/ML support training capability information, or AI/ML upgrade capability information.

36. The method according to Supplement 34, wherein the method further includes:
when the first device determines that the second device has an AI/ML capability but the model identifier and/or version information of the information generation portion is/are different from the model identifier and/or version information of the information reconstruction portion, the first device acquires the first data and/or the second data corresponding to the model identifier and/or version information of the information reconstruction portion of the second device.

37. The method according to Supplement 36, wherein the method further includes:
after the information generation portion completes training by using the first data and the second data, the first device sets the model identifier and/or version information of the information generation portion to be identical to the model identifier and/or version information of the information reconstruction portion.

38. The method according to Supplement 37, wherein the method further includes:
the first device transmits acknowledgement information to the second device acknowledging that the information reconstruction portion of the second device is available, and/or indication information enabling the information generation portion and/or the information reconstruction portion.

39. A method for acquiring data, wherein an AI/ML model includes a CSI generation portion located in a terminal equipment and a CSI reconstruction portion located in a network device, and the method includes:

the network device acquires a specific codebook vector inputted into the CSI generation portion, and
the network device acquires CSI bit information outputted from the CSI generation portion and corresponding to the codebook vector.

40. The method according to Supplement 39, wherein the method further includes:
the network device inputs the CSI bit information into the CSI reconstruction portion and trains the CSI reconstruction portion by taking the codebook vector as label data.

41. The method according to Supplement 39 or 40, wherein the codebook vector (X) is data inputted to the CSI generation portion; the CSI bit information (Y) is a bit sequence generated after the codebook vector (X) is inputted to the CSI generation portion.

42. The method according to any one of Supplements 39 to 41, wherein the CSI bit information is carried by a control channel or a data channel and transmitted via an air interface, and/or, the codebook vector is generated via a data index or an indication sequence or a precoding matrix indication (PMI) according to a predefined rule.

43. The method according to any one of Supplements 39 to 41, wherein
the network device obtains the CSI bit information and/or the codebook vector from interior of the network device or from exterior of the network device according to identification information related to the CSI generation portion.

44. The method according to Supplement 43, wherein the identification information related to the CSI generation portion includes: a model identifier and/or version information to which the CSI generation portion corresponds, and/or data configuration information of a model to which the CSI generation portion corresponds, and/or a data index of the CSI generation portion, and/or an indication sequence of a codebook vector or DFT vector of the CSI generating portion.

45. The method according to any one of Supplements 39 to 44, wherein the method further includes:

the network device transmits a model training indication and configuration information for a model identifier to the terminal equipment; the configuration information including an indication sequence of a codebook vector or a DFT matrix vector for training; and
the network device receives an indication sequence for indicating a codebook vector or a DFT vector transmitted by the terminal equipment, and a CSI generation part output bit sequence corresponding to the vector.

46. The method according to Supplement 45, wherein the method further includes:
the network device generates a corresponding codebook vector or DFT matrix vector based on the indication sequence and according to a predefined rule.

47. The method according to Supplement 45 or 46, wherein the method further includes:

the network device receives a resource request from the terminal equipment; and
the network device configures uplink resources for the terminal equipment, such that the terminal equipment transmits the indication sequence and the CSI generation part output bit sequence.

48. The method according to any one of Supplements 39 to 47, wherein the AI/ML model is a two-sided model and has a model identifier and a version identifier; the CSI generation portion and the CSI reconstruction portion of one two-sided model have the same model identifier and version identifier, and the CSI generation portion and the CSI reconstruction portion have different sub-identifiers.

49. The method according to any one of Supplements 39 to 48, wherein the method further includes:

the network device transmits an AI/ML-related capability query to the terminal equipment; and
the network device receives an AI/ML-related capability response fed back by the terminal equipment.

50. The method according to Supplement 49, wherein the AI/ML-related capability includes at least one of the following: signal processing module information, AI/ML support information, AI/ML model identification information, version information, data configuration information, AI/ML training capability information, or AI/ML upgrade capability information.

51. The method according to Supplement 49, wherein the method further includes:
when the network device determines that the terminal equipment has an AI/ML capability but the model identifier and/or version information of the CSI generation portion is/are different from the model identifier and/or version information of the CSI reconstruction portion, the network device indicates or configures the terminal equipment to transmit a CSI bit sequence and/or a corresponding codebook vector for training, corresponding to the model identifier and/or version information of the CSI generation portion.

52. The method according to Supplement 51, wherein a format and/or size of the CSI is/are predefined, or the format and/or size of the CSI is/are configured by the network device.

53. The method according to Supplement 51, wherein the method further includes:
after the CSI reconstruction portion completes training by using the CSI bit information and the codebook vector, the network device sets the model identifier and/or version information of the CSI reconstruction portion to be identical to the model identifier and/or version information of the CSI generation portion.

54. The method according to Supplement 53, wherein the method further includes:
the network device transmits indication information enabling the CSI generation portion and/or the CSI reconstruction portion to the terminal equipment, and/or transmits acknowledgement information acknowledging that the CSI generation portion may be used.

55. The method according to any one of Supplements 39 to 54, wherein the method further includes:
the network device extends the codebook vector and takes the expanded codebook vector as the label data.

56. The method according to Supplement 55, wherein in the expanded codebook vector, the number of selectable beams of W1 is up to 6, 8, 10, 12, 16; W2 has a mapping angle of up to 5 bits and an amplitude of up to 5 bits.

57. A method for acquiring data, wherein an AI/ML model includes a CSI generation portion located in a terminal equipment and a CSI reconstruction portion located in a network device, and the method includes:

the terminal equipment acquires a codebook vector outputted by the CSI reconstruction portion; and
the terminal equipment acquires CSI bit information inputted into the CSI reconstruction portion and corresponding to the codebook vector.

58. The method according to Supplement 57, wherein the method further includes:
the terminal equipment inputs the codebook vector into the CSI generation portion and trains the CSI generation portion by taking the CSI bit information as label data.

59. The method according to Supplement 57 or 58, wherein the CSI bit information (Y) is information inputted to the CSI reconstruction portion and corresponding to the codebook vector; the codebook vector (X) is part or all of data of a specific dataset, and is generated by the CSI bit information (Y) after being inputted to the CSI reconstruction portion.

60. The method according to any one of Supplements 57 to 59, wherein the CSI bit information is carried by a control channel or a data channel and transmitted via an air interface, and/or, the codebook vector is generated via a data index or an indication sequence or a precoding matrix indication (PMI) according to a predefined rule.

61. The method according to any one of Supplements 57 to 59, wherein
the terminal equipment obtains the CSI bit information and/or the codebook vector from a memory or interior of the terminal equipment or from exterior of the terminal equipment according to identification information related to the CSI reconstruction portion.

62. The method according to Supplement 61, wherein the identification information related to the CSI reconstruction portion includes: a model identifier and/or version information to which the CSI reconstruction portion corresponds, and/or data configuration information of a model to which the CSI reconstruction portion corresponds, and/or a data index of the CSI reconstruction portion, and/or an indication sequence of a codebook vector or DFT vector of the CSI reconstruction portion.

63. The method according to any one of Supplements 57 to 62, wherein the method further includes:
the terminal equipment receives a model training indication and configuration information for a model identifier, transmitted by the network device; the configuration information including an indication sequence of a codebook vector or a DFT matrix vector for training, and a CSI reconstruction portion input bit sequence corresponding to the vector.

64. The method according to Supplement 63, wherein the method further includes:
the terminal equipment generates a corresponding codebook vector or DFT matrix vector based on the indication sequence and according to a predefined rule.

65. The method according to Supplement 63 or 64, wherein the method further includes:

the terminal equipment receives resource configuration of the network device; and
the terminal equipment receives the indication sequence and the CSI reconstruction portion input bit sequence according to the resource configuration.

66. The method according to any one of Supplements 57 to 65, wherein the AI/ML model is a two-sided model and has a model identifier and a version identifier; the CSI generation portion and the CSI reconstruction portion of the same AI/ML model have the same model identifier and version identifier, and the CSI generation portion and the CSI reconstruction portion have different sub-identifiers.

67. The method according to any one of Supplements 57 to 66, wherein the method further includes:

the terminal equipment receives an AI/ML-related capability query transmitted by the network device; and
the terminal equipment feeds back an AI/ML-related capability response to the network device.

68. The method according to Supplement 67, wherein the AI/ML-related capability includes at least one of the following: signal processing module information, AI/ML support information, AI/ML model identification information, version information, data configuration information, AI/ML training capability information, or AI/ML upgrade capability information.

69. The method according to Supplement 67, wherein when the network device determines that the terminal equipment has an AI/ML capability but the model identifier and/or version information of the CSI generation portion is/are different from the model identifier and/or version information of the CSI reconstruction portion, the network device indicates or configures the terminal equipment to receive CSI bit information and/or a codebook vector corresponding to the model identifier and/or version information of the CSI reconstruction portion.

70. The method according to Supplement 69, wherein a format and/or size of the CSI is/are predefined, or the format and/or size of the CSI is/are configured by the network device.

71. The method according to Supplement 70, wherein the method further includes:
after the CSI generation portion completes training by using the codebook vector and the CSI bit information, the terminal equipment sets the model identifier and/or version information of the CSI generation portion to be identical to the model identifier and/or version information of the CSI reconstruction portion.

72. The method according to Supplement 71, wherein the method further includes:
the terminal equipment transmits acknowledgement information to the network device acknowledging that its CSI generation portion is available, and/or indication information indicating that the CSI generation portion update is completed.

73. The method according to any one of Supplements 57 to 72, wherein the method further includes:
the terminal equipment extends the codebook vector and takes the expanded codebook vector as the label data.

74. The method according to Supplement 73, wherein in the expanded codebook vector, the number of selectable beams of W1 is up to 6, 8, 10, 12, 16; W2 has a mapping angle of up to 5 bits and an amplitude of up to 5 bits.

75. A network device, including a memory and a processor, the memory storing a computer program, and the processor being configured to execute the computer program to implement the method for acquiring data according to any one of Supplements 1 to 56.

76. A terminal equipment, including a memory and a processor, the memory storing a computer program, and the processor being configured to execute the computer program to implement the method for acquiring data according to any one of Supplements 1 to 38 and 57-74.

**Claims**

1. An apparatus for acquiring data, configured in a second device, wherein an AI/ML model comprises an information generation portion located in a first device and an information reconstruction portion located in the second device, and the apparatus for acquiring data comprises:

   a first acquiring unit configured to acquire first data inputted into the information generation portion; and
   a second acquiring unit configured to acquire second data corresponding to the first data and outputted from the information generation portion.

2. The apparatus according to claim 1, wherein the apparatus further comprises:
   a first training unit configured to input the second data into the information reconstruction portion and train the information reconstruction portion by taking the first data as label data.

3. The apparatus according to claim 1, wherein the first data are a part or all of data of a specific dataset inputted into the information generation portion, and the second data are corresponding data generated after the first data are inputted into the information generation portion.

4. The apparatus according to claim 1, wherein the information generation portion in the first device and the information reconstruction portion in the second device perform training by using the first data and the second data respectively; and
   when the first data are inputted, the trained information generation portion in the first device outputs data that are the second data or data that are similar to the second data, and when the second data are inputted, the trained information reconstruction portion in the second device outputs data that are the first data or data similar to the first data.

5. The apparatus according to claim 1, wherein the first data and the second data are paired datasets, the paired datasets having model identification information.

6. The apparatus according to claim 4, wherein one first data corresponds to multiple second data.

7. The apparatus according to claim 1, wherein the first acquiring unit or the second acquiring unit obtains the first data and/or the second data from interior of the second device or from exterior of the second device according to identification information related to the information generation portion.

8. The apparatus according to claim 7, wherein the identification information related to the information generation portion comprises: a model identifier and/or version information to which the information generation portion corresponds, and/or data configuration information of a model to which the information generation portion corresponds.

9. The apparatus according to claim 1, wherein the second data are carried by a control channel or a data channel and transmitted via an air interface, or the second data are generated via a data index according to a predefined rule, or an index of the second data is transmitted by the first device to the second device via an air interface.

10. The apparatus according to claim 1, wherein the first data are pre-stored in the second device, or the first data are generated via a data index according to a predefined rule, or the first data are transmitted by the first device to the second device via an air interface, or an index of the first data is transmitted by the first device to the second device via an air interface.

11. The apparatus according to claim 1, wherein the AI/ML model has a model identifier and a version identifier, the information generation portion and the information reconstruction portion of the same AI/ML model use the same model identifier and version identifier, and the information generation portion and the information reconstruction portion have different sub-identifiers.

12. The apparatus according to claim 1, wherein the apparatus further comprises:

a transmitting unit configured to transmit an AI/ML-related capability query to the first device; and
a receiving unit configured to receive an AI/ML-related capability response fed back by the first device.

13. The apparatus according to claim 12, wherein the AI/ML-related capability comprises at least one of the following: signal processing module information, AI/ML support information, AI/ML model identification information, version information, data configuration information, AI/ML support training capability information, or AI/ML upgrade capability information.

14. The apparatus according to claim 12, wherein, when the second device determines that the first device has an AI/ML capability but the model identifier and/or version information of the information generation portion is/are different from the model identifier and/or version information of the information reconstruction portion, the first acquiring unit or the second acquiring unit acquires the first data and/or the second data corresponding to the model identifier and/or version information of the information generation portion of the first device.

15. The apparatus according to claim 14, wherein, after the information reconstruction portion completes training by using the first data and the second data, the model identifier and/or version information of the information reconstruction portion is/are set to be identical to the model identifier and/or version information of the information generation portion.

16. The apparatus according to claim 15, wherein, the transmitting unit further transmits acknowledgement information to the first device acknowledging that the information generation portion of the first device is available, and/or transmits indication information enabling the information generation portion and/or the information reconstruction portion.

17. An apparatus for acquiring data, configured in a first device, wherein an AI/ML model comprises an information generation portion located in the first device and an information reconstruction portion located in a second device, and the apparatus comprises:

a third acquiring unit configured to acquire first data outputted by the information reconstruction portion; and
a fourth acquiring unit configured to acquire second data inputted into the information reconstruction portion and corresponding to the first data.

18. The apparatus according to claim 17, wherein the apparatus further comprises:
a second training unit configured to input the first data into the information generation portion and train the information generation portion by taking the second data as label data.

19. The apparatus according to claim 17, wherein the second data are data inputted into the information reconstruction portion and corresponding to the first data, and the first data are a part or all of a specific dataset and are generated after the second data are inputted into the information reconstruction portion.

20. A communication system, wherein an AI/ML model comprises a channel state information generation portion located in a terminal equipment and a channel state information reconstruction portion located in a network device, and the system comprises:

the network device configured to acquire a specific codebook vector inputted into the channel state information generation portion, and acquire channel state information bit information outputted from the channel state information generation portion and corresponding to the codebook vector; and
the terminal equipment configured to acquire a codebook vector outputted by the channel state information reconstruction portion, and acquire channel state information bit information inputted into the channel state information reconstruction portion and corresponding to the codebook vector.

**FIG. 1**

**FIG. 2**

**FIG. 3**

FIG. 4

FIG. 5

the second device acquires first data X inputted into the information generation portion

the second device acquires second data Y corresponding to the first data X and outputted from the information generation portion

FIG. 6

**Source information** $\xrightarrow{\quad X \quad}$ TX → Information generation portion $\xrightarrow{\quad Y \quad}$

**Recovery information** $\xleftarrow{\quad X' \quad}$ RX ← Information reconstruction portion $\xleftarrow{\quad Y' \quad}$

**FIG. 7**

**FIG. 8**

**FIG. 9**

**FIG. 10**

FIG. 11

FIG. 12

FIG. 13

1401

the network device acquires a specific codebook vector
inputted into the CSI generation portion

1402

the network device acquires CSI bit information outputted
from the CSI generation portion and corresponding to the
codebook vector

**FIG. 14**

Terminal side

Codebook
vector set → CSI generation portion

CSI output set corresponding
to codebook index set or
codebook vector set

Network side

CSI reconstruction portion

Reconstructed
codebook vector set →

**FIG. 15**

Network side

Dataset: CSI generation portion
outputs corresponding to
codebook vector serial numbers

CSI
reconstruction
portion

Output vector

Model training

Label: codebook vector
corresponding to a codebook index

Loss Function

**FIG. 16**

Terminal side

Codebook
vector set

CSI
generation
portion

CSI output set
corresponding to the
codebook vector set

Network side

CSI
reconstruction
portion

Reconstructed
codebook vector set

**FIG. 17**

**FIG. 18**

**FIG. 19**

| Network side | | Terminal side |

**Network side queries the terminal side about CSI-related AI capability including identifier information such as a CSI generator ID or version**

AI/ML capability query, including query about identifier information such as a ML ID, version →

AI/ML capability response, including ML identifier information reporting ←

**CSI reconstruction portion of the network side and the CSI generation portion of the terminal side do not match**

Terminal is indicated to transmit data configuration information (such as a bit length corresponding to each codebook vector)of a CSI output set corresponding to a codebook vector set →

CSI output set reporting configuration →

CSI output set corresponding to the reporting configuration ←

**Network side uses codebook vectors corresponding to codebook serial numbers as label, and uses a CSI generation portion output set corresponding to codebook serial numbers as input data to train the CSI reconstruction portion, so that model outputs approximate the label. After the training is completed, the model and the model identification information are updated**

Terminal is configured and indicated to adopt the CSI generation portion to perform measurements and feedbacks →

**According to configured CSI measurement resources, CSI is generated on a measurement result by using the CSI generation portion, and reporting is performed according to the configured resources**

CSI reporting ←

**Updated CSI reconstruction portion is used to reconstruct received CSI**

## FIG. 20

2101

a terminal equipment acquires a codebook vector outputted by the CSI reconstruction portion

2102

the terminal equipment acquires CSI bit information inputted into the CSI reconstruction portion and corresponding to the codebook vector

**FIG. 21**

Terminal side

CSI generation portion

CSI dataset corresponding to a codebook vector set

Network side

CSI reconstruction portion

**FIG. 22**

Terminal side

Dataset: codebook vector set corresponding to codebook vector serial numbers

CSI generation portion

Output vector

Model training

Label: CSI dataset corresponding to a codebook vector set

Loss Function

**FIG. 23**

| Network side | | Terminal side |
|---|---|---|

| **Network side queries the terminal side about CSI-related capabilities, including identification information such as CSI generation portion ID, version, and terminal upgrade capability information** | **AI/ML capability query, including identifier query such as a model ID/ version, upgrade capability query** → | |
| | **AI/ML capability response, including information reporting such as a model identifier** ← | |
| **CSI reconstruction portion of the network side and the CSI generation portion of the terminal side do not match** | **Terminal is indicated to perform a training upgrade requirement** → | |
| | **Terminal performs a training upgrade response** ← | |
| **Network side forms input information of the output codebook vector corresponding to the CSI reconstruction portion into a dataset. The dataset may also possibly preexist at the network side** | **Codebook-related indication information, CSI dataset corresponding to a codebook sequence, model identification information** → | **Terminal side uses codebook vectors corresponding to codebook serial numbers as inputs, and uses received CSI data corresponding to codebook serial numbers from the network side as label to train the CSI generation portion, so that the model outputs approximate label. After the model training is completed, the model and the model identification information are updated** |
| | **Model update is completed or model identification information is updated** ← | |
| **Model pairing is completed** | **Terminal is configured and indicated to adopt the CSI generation portion to perform measurements and feedbacks** → | |
| **Received CSI is reconstructed by using the CSI reconstruction portion** | **CSI reporting** ← | **According to configured CSI measurement resources, CSI is generated on a measurement result by using the CSI generation portion, and reporting is performed according to the configured resources** |

**FIG. 24**

2500

Apparatus for
acquiring data

2501

Apparatus for
acquiring data

2502

Second acquiring
unit

2503

First training unit

**FIG. 25**

2600

Apparatus for
acquiring data

2601

Apparatus for
acquiring data

2602

Fourth acquiring
unit

2603

Second training unit

**FIG. 26**

2700

Network device 2750

2720

Memory

2730

Program

2710

Processor

2740

Transceiver

**FIG. 27**

2800

Terminal equipment

2810

2830

2840

Input unit

Communication module
(transmitter/receiver)

Processor

Memory

Buffer

Application/fun
ction

2820

Data

Program

Display

2850

Power supply

2860

**FIG. 28**

# EP 4 572 243 A1

## INTERNATIONAL SEARCH REPORT

| International application No. |
|---|
| **PCT/CN2022/112299** |

### A. CLASSIFICATION OF SUBJECT MATTER

H04L 25/02(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 通信, 终端, 信道, 状态, 网络, 编码, 解码, 训练, 模型, communication, terminal, channel, state, network, coding, decoding, training, model, AI, ML, CSI

### C. DOCUMENTS CONSIDERED TO BE RELEVANT

| Category* | Citation of document, with indication, where appropriate, of the relevant passages | Relevant to claim No. |
|---|---|---|
| X | CN 114679355 A (HUAWEI TECHNOLOGIES CO., LTD.) 28 June 2022 (2022-06-28) description, paragraphs 3 and 91-285, and figures 1-17 | 1-20 |
| A | CN 114697984 A (CHINA MOBILE COMMUNICATION LTD., RESEARCH INSTITUTE et al.) 01 July 2022 (2022-07-01) entire document | 1-20 |
| A | CN 114726413 A (CHINA MOBILE COMMUNICATION LTD., RESEARCH INSTITUTE et al.) 08 July 2022 (2022-07-08) entire document | 1-20 |
| A | KR 20220041031 A (ELECTRONICS & TELECOMMUNICATIONS RESEARCH INSTITUTE) 31 March 2022 (2022-03-31) entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 December 2022** | **20 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

52

## INTERNATIONAL SEARCH REPORT
### Information on patent family members

International application No.

**PCT/CN2022/112299**

| Patent document cited in search report | | | Publication date (day/month/year) | Patent family member(s) | | | Publication date (day/month/year) |
|---|---|---|---|---|---|---|---|
| CN | 114679355 | A | 28 June 2022 | WO | 2022135446 | A1 | 30 June 2022 |
| CN | 114697984 | A | 01 July 2022 | | None | | |
| CN | 114726413 | A | 08 July 2022 | | None | | |
| KR | 20220041031 | A | 31 March 2022 | US | 2022092479 | A1 | 24 March 2022 |

Form PCT/ISA/210 (patent family annex) (January 2015)